# EUROPEAN PATENT APPLICATION

(11) **EP 4 629 730 A1**
(43) Date of publication of application: **08.10.2025**
(21) Application number: 23897522.1
(22) Date of filing: 16.11.2023
(51) Int. Cl.: H04W 72/25, H04W 72/512, H04W 92/18

(54) **TERMINAL DEVICE, BASE STATION, AND COMMUNICATION SYSTEM**

(30) Priority: 28.11.2022 JP 2022189275
(71) Applicant: Sony Group Corporation, Tokyo 108-0075 (JP)
(72) Inventor: SUGAI, Ren, Tokyo 108-0075 (JP); SHIMEZAWA, Kazuyuki, Tokyo 108-0075 (JP); UCHIYAMA, Hiromasa, Tokyo 108-0075 (JP)
(74) Representative: Witte, Weller & Partner Patentanwälte mbB
(86) International application number: PCT/JP2023/041280
(87) International publication number: WO 2024/116871

(57) **Abstract**

A terminal device is capable of communicating with a first terminal device capable of performing communication based on a first sidelink communication scheme. The terminal device includes an acquisition unit that acquires first control information regarding a signal transmitted based on the first sidelink communication scheme, and a notification unit that notifies a second terminal device of second control information regarding the first control information. The second terminal device performs communication based on a second sidelink communication scheme different from the first sidelink communication scheme.

## Description

### Field

The present disclosure relates to a terminal device, a base station, and a communication system.

### Background

In recent years, sidelink communication has been drawing attention. For example, device-to-device (D2D) communication for performing direct communication between terminal devices has attracted attention as one form of sidelink communication.

### Citation List

### Non Patent Literature

Non Patent Literature 1: TS22.186 V16.2.0, 3rd Generation Partnership Project; Technical Specification Group Services and System Aspects; Enhancement of 3GPP support for V2X scenarios; Stage 1 (Release 16)

### Summary

### Technical Problem

There is an increasing demand for sidelink communication. In order to satisfy the demand, it is assumed, in the future, that there will be a plurality of communication schemes for the sidelink communication according to demands. When the plurality of communication schemes is mixed in one environment, there is a possibility that adjustment between terminal devices having different communication schemes is not successful, and sidelink communication with high communication performance (e.g., stable communication quality, high communication quality, low delay, high reliability, or high throughput) is not realized.

Therefore, the present disclosure proposes a terminal device, a base station, and a communication system capable of realizing sidelink communication with high communication performance.

Note that the above problem or object is merely one of a plurality of problems or objects that can be solved or achieved by a plurality of embodiments disclosed in the present specification.

### Solution to Problem

In order to solve the above problem, a terminal device according to one embodiment of the present disclosure that capable of communicating with a first terminal device capable of performing communication based on a first sidelink communication scheme, the terminal device includes: an acquisition unit that acquires first control information regarding a signal transmitted based on the first sidelink communication scheme; and a notification unit that notifies a second terminal device of second control information regarding the first control information, the second terminal device performing communication based on a second sidelink communication scheme different from the first sidelink communication scheme.

### Brief Description of Drawings

FIG. 1 is a diagram illustrating an example of a conventional sidelink frame configuration.
FIG. 2 is a diagram illustrating an example of the conventional sidelink frame configuration.
FIG. 3 is a diagram illustrating an example of a sidelink frame configuration assumed to be adopted in the future.
FIG. 4 is a diagram illustrating a configuration example of a communication system according to an embodiment of the present disclosure.
FIG. 5 is a diagram illustrating a configuration example of a management device according to the embodiment of the present disclosure.
FIG. 6 is a diagram illustrating a configuration example of a base station according to the embodiment of the present disclosure.
FIG. 7 is a diagram illustrating a configuration example of a terminal device according to the embodiment of the present disclosure.
FIG. 8 is a diagram illustrating a configuration example of a terminal device according to the embodiment of the present disclosure.
FIG. 9 is a diagram illustrating an outline of sidelink communication.
FIG. 10 is a diagram illustrating a sidelink resource pool.
FIG. 11 is a diagram illustrating a resource allocation mode 2 (d).
FIG. 12 is a diagram illustrating an example of a communication environment assumed in the present embodiment.
FIG. 13 is a sequence diagram when a transmitting station of a URLLC terminal transmits second control information.
FIG. 14 is a sequence diagram when a transmitting station of a representative URLLC terminal transmits the second control information.
FIG. 15 is a sequence diagram when a receiving station of the URLLC terminal transmits the second control information.
FIG. 16 is a sequence diagram when the base station transmits the second control information.
FIG. 17 is a sequence diagram when a non-URLLC terminal capable of receiving control information of a URLLC terminal transmits the second control information.
FIG. 18 is a diagram illustrating a state in which the second control information is arranged at a position different from a position of a conventional control signal.
FIG. 19 is a diagram illustrating a state in which the second control information is arranged at the position of the conventional control signal.

### Description of Embodiments

Hereinafter, embodiments of the present disclosure will be described with reference to the drawings. In each of the following embodiments, same parts are given the same reference signs to omit redundant description.

In addition, in the present specification and the drawings, a plurality of components having substantially the same functional configuration may be distinguished by attaching different numerals after the same reference sign. For example, a plurality of configurations having substantially the same functional configuration is distinguished as terminal devices 40₁, 40₂, and 40₃ as necessary. However, when it is not particularly necessary to distinguish each of the plurality of components having substantially the same functional configuration, only the same reference sign is given. For example, in a case where it is not necessary to particularly distinguish the terminal devices 40₁, 40₂, and 40₃, they are simply referred to as terminal devices 40.

In the description below, one or more embodiments (including examples and modifications) can be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

The present disclosure will be described according to the following item order.
1. Outline
2. System configuration
2-1. Configuration example of communication system
2-2. Configuration example of management device
2-3. Configuration example of base station
2-4. Configuration of first terminal device
2-5. Configuration of second terminal device
3. Sidelink communication
3-1. Outline of sidelink communication
3-2. Details of sidelink communication
3-3. Sidelink resource pool
3-4. Sidelink resource allocation method
3-5. Sensing in sidelink communication
3-6. Sidelink communication of the present embodiment
4. Operation of communication system
4-1. Outline of operation of communication system
4-2. First form
4-3. Second form
4-4. Third form
4-5. Fourth form
4-6. Fifth form
4-7. Transmission of second control information
4-8. Summary of transmission of control information
5. Modifications
6. Conclusion

### <<1. Outline>>

In recent years, sidelink communication has been drawing attention. In 3GPP (registered trademark), device-to-device (D2D) communication for performing direct communication between terminal devices is standardized as the sidelink communication.

In the sidelink communication, vehicle-to-everything (V2X) communication is one of main use cases.

As the V2X communication, vehicle-to-vehicle (V2V), vehicle-to-infrastructure (V2I), vehicle-to-pedestrian (V2P), and vehicle-to-network (V2N) are assumed. In particular, platooning, advanced driving, an extended sensor, and remote driving have been studied as specific use cases of V2X communication in 5G NR. In order to realize the above, ultra-reliable and low latency communications (URLLC) is required for the V2X communication. For the URLLC, standards are formulated so as to realize a delay of 10 milliseconds or less and reliability of 99.999%.

Heretofore, inter-vehicle communication has been considered as the V2X communication. However, in the future, intra-vehicle communication can also be assumed as a technology extension of the sidelink communication. Here, considering automatic driving, a control device basically controls a vehicle based on data from a sensor or a camera in the vehicle. Therefore, the control device uses information obtained by inter-vehicle communication (i.e., conventional V2X communication) as auxiliary information. Therefore, in-vehicle communication is required to have lower latency and higher reliability than the inter-vehicle communication.

Furthermore, the sidelink communication can be utilized not only in the V2X communication but also in various use cases. For example, factory automation is one of use cases in which the sidelink communication can be utilized. In a factory, it is examined that a large number of devices such as sensors and cameras are installed for direct communication with each other. In particular, when a production line is frequently changed according to what is to be manufactured, a demand for the sidelink communication is high in URLLC.

As the demand for the sidelink communication increases, it is assumed, in the sidelink communication in the future, that there will be a plurality of communication schemes according to demands. For example, in order to support the URLLC in the future, it is assumed that there will be a sidelink communication scheme using a frame configuration different from a conventional frame configuration.

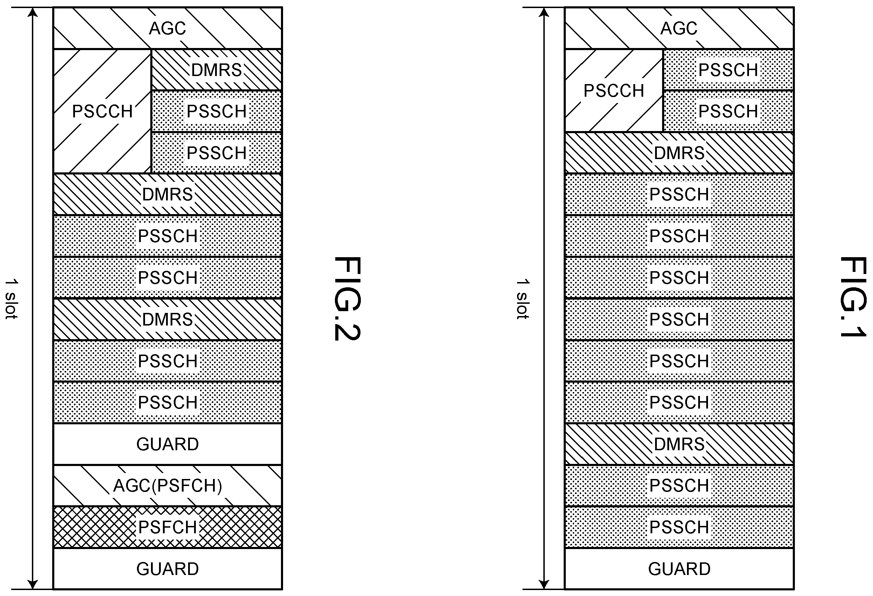

FIGS. 1 and 2 are diagrams each illustrating an example of a conventional sidelink frame configuration. FIG. 1 illustrates a sidelink frame configuration when a physical sidelink control channel (PSCCH) has a two-symbol configuration, a demodulation reference signal (DMRS) has a two-symbol allocation, and there is no physical sidelink feedback channel (PSFCH). In addition, FIG. 2 illustrates a sidelink frame configuration when the PSCCH has a three-symbol configuration, the DMRS has a three-symbol allocation, and there is the PSFCH. Currently, in sidelink communication defined in 3GPP, control is performed based on the frame configurations illustrated in FIGS. 1 and 2. The frame has a configuration in which a slot is a minimum unit. Here, when a subcarrier interval is 15 kHz, a time length of one slot is one millisecond. As described above, the conventional sidelink communication mainly assumes the use case of V2X, and its requirement for the latency is 10 milliseconds. Therefore, there has been no problem even when one slot is the minimum unit, but in the future, it is not possible to support use cases in which ultra-low latency of less than 1 millisecond is required.

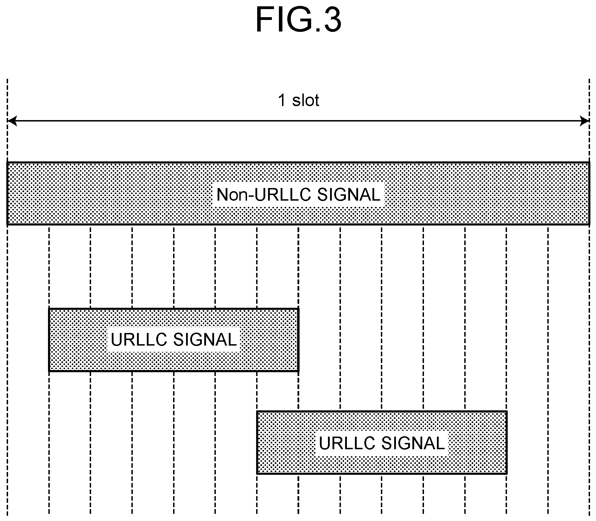

Therefore, in the future sidelink communication, it is assumed that an operation of starting transmission of a signal without depending on a slot boundary is introduced as one method of accommodating URLLC traffic. FIG. 3 is a diagram illustrating an example of a sidelink frame configuration assumed to be adopted in the future. A non-URLLC signal in FIG. 3 is a conventional signal conforming to the slot boundary, and a URLLC signal in FIG. 3 is a signal assumed in the future that does not depend on the slot boundary. In this frame configuration assumed in the future, the terminal device transmits a signal (URLLC signal illustrated in FIG. 3) having a specific OFDM symbol length from an OFDM symbol position not dependent on the slot boundary. At this time, a length of the symbol length is set to a length that does not exceed the slot boundary, and the signal does not cross the slot boundary.

As described above, in the sidelink communication, it is assumed that there will be a plurality of communication schemes according to the demand in the future. When the plurality of sidelink communication schemes is mixed in one environment, there is a possibility that adjustment between terminal devices having different communication schemes is not successful, and the sidelink communication with high communication performance (e.g., stable communication quality, high communication quality, low delay, high reliability, or high throughput) may not be realized.

This will be described more specifically.

The present embodiment assumes an environment in which a sidelink terminal (hereinafter referred to as the URLLC terminal.) that transmits traffic (hereinafter referred to as URLLC traffic) for which low latency and high reliability are required and a sidelink terminal (hereinafter referred to as a non-URLLC terminal) that transmits traffic for which low latency and high reliability are not required are mixed.

Here, the URLLC terminal is a terminal device capable of performing communication based on a sidelink communication scheme allowing signals from a plurality of terminal devices to exist in one radio resource of one slot. Here, "signals from a plurality of terminal devices exist in one radio resource of one slot" means that there are signals transmitted by the plurality of terminal devices within radio resource units used to transmit a signal. Here, one radio resource may be, for example, a resource block. Note that this one radio resource does not include other resources for user multiplexing. For example, this one radio resource does not include resources of different frequency bands that are frequency-division multiplexed in the same slot. The same applies to spatial resources of spatial multiplexing and non-orthogonal resources of non-orthogonal multiplexing.

In addition, the non-URLLC terminal is a terminal device capable of performing communication based on the sidelink communication scheme in which a signal from one terminal device exists in one radio resource of one slot. Here, "a signal from one terminal device exists in one radio resource of one slot" means that a signal transmitted by one terminal device exists within radio resource units used to transmit a data signal. Here, one radio resource may be, for example, one resource block. Note that this one radio resource does not include other resources for user multiplexing. For example, this one radio resource does not include resources of different frequency bands that are frequency-division multiplexed in the same slot. The same applies to spatial resources of spatial multiplexing and non-orthogonal resources of non-orthogonal multiplexing.

Note that, in the present embodiment, a slot is a fixed time section when transmission is performed by time division multiplexing. A plurality of slots may configure a larger time interval or a smaller time interval. For example, the plurality of slots may configure a subframe. Further, the plurality of subframes may form a radio frame. Similarly, a plurality of subslots may configure a slot.

As described above, in the future sidelink communication, it is assumed that an operation of starting transmission of a signal without depending on the slot boundary is introduced as one method of accommodating the URLLC traffic. When this operation is introduced, it is assumed that the URLLC terminal also transmits the control information including schedule information at timing independent of the slot boundary. On the other hand, the non-URLLC terminal transmits a signal at a timing conforming to the slot boundary. Therefore, the non-URLLC terminal transmits control information related to signal transmission at a predetermined position (PSCCH) indicated in the frame configuration.

The URLLC terminal and the non-URLLC terminal monitor a position where the PSCCH is transmitted, and acquire the control information of another terminal device. At this time, since the non-URLLC terminal acquires only the control information transmitted at a predetermined position in the slot, the non-URLLC terminal cannot acquire the control information of the URLLC terminal that transmits the control information independent of the slot. In this case, the sidelink communication cannot be properly adjusted between the URLLC terminal and the non-URLLC terminal.

Therefore, in the present embodiment, the above problem is solved by the following method.

A communication system of the present exemplary embodiment includes a first terminal device (e.g., URLLC terminal) capable of performing communication based on a first sidelink communication scheme, and a second terminal device (e.g., non-URLLC terminal) capable of performing communication based on a second sidelink communication scheme different from the first sidelink communication scheme. Here, the first sidelink communication scheme is, for example, a sidelink communication scheme in which signals from a plurality of terminal devices can exist in one radio resource of one slot. In addition, the second sidelink communication scheme is, for example, a sidelink communication scheme in which a signal from one terminal device exists in one radio resource of one slot.

The first terminal device (e.g., URLLC terminal) acquires first control information regarding a signal transmitted based on the first sidelink communication scheme. For example, the first terminal device may acquire the first control information transmitted by another first terminal device, or may acquire the first control information scheduled to be transmitted (or transmitted) by the first terminal device from its own storage unit. Then, the first terminal device notifies the second terminal device (e.g., non-URLLC terminal) of second control information regarding the first control information. At this time, the first terminal device may notify the second control information through a channel receivable by the second terminal device based on the second sidelink communication scheme. Content of the second control information may be content of the first control information itself, or may be obtained by integrating a plurality of pieces of the first control information collected from a plurality of first terminal devices into one piece of information.

Thus, the second terminal device (e.g., non-URLLC terminal) can recognize the control information of the first terminal device (e.g., URLLC terminal), so that adjustment (e.g., adjustment of use of radio resources) of the sidelink communication is successfully performed between the first terminal device and the second terminal device. As a result, the communication system can realize sidelink communication with high communication performance.

The outline of the present embodiment has been described above, and a communication system according to the present embodiment will be described in detail below.

### <<2. System configuration>>

First, a configuration of a communication system 1 will be specifically described with reference to the drawings.

### <2-1. Configuration example of communication system>

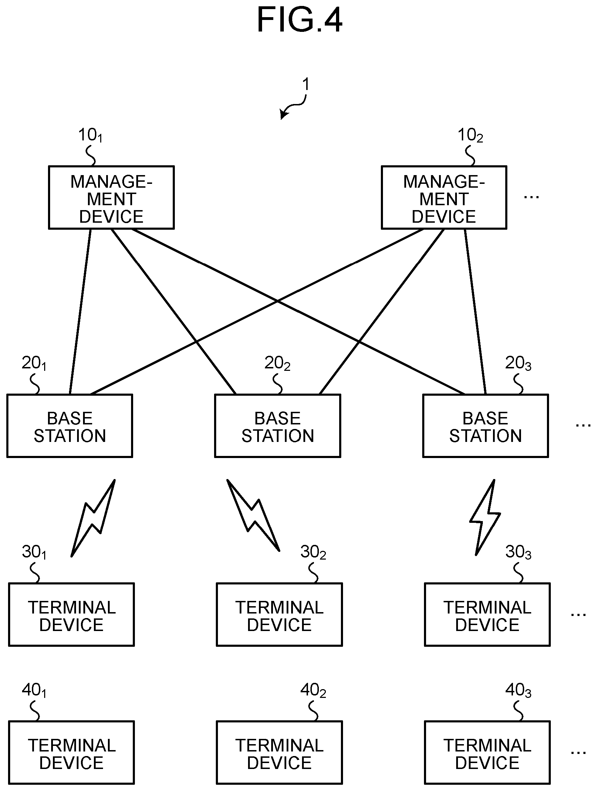

FIG. 4 is a diagram illustrating a configuration example of the communication system 1 according to the embodiment of the present disclosure. The communication system 1 includes a management device 10, a base station 20, a terminal device 30, and a terminal device 40. Here, the terminal device 30 is the first terminal device (e.g., URLLC terminal) capable of performing communication based on the first sidelink communication scheme. In addition, the terminal device 40 is the second terminal device (e.g., non-URLLC terminal) that performs communication based on the second sidelink communication scheme different from the first sidelink communication scheme.

Here, the first sidelink communication scheme is, for example, a sidelink communication scheme in which signals from a plurality of terminal devices can exist in one radio resource of one slot. In addition, the second sidelink communication scheme is, for example, a sidelink communication scheme in which a signal from one terminal device exists in one radio resource of one slot. However, the first sidelink communication scheme and the second sidelink communication scheme are not limited to this example. Any sidelink communication scheme can be adopted as the first sidelink communication scheme and the second sidelink communication scheme as long as they are different sidelink communication schemes.

The communication system 1 provides a user with a wireless network capable of mobile communication by coordinated operation of wireless communication apparatuses configuring the communication system 1. The wireless network of the present embodiment includes, for example, a radio access network and a core network. Note that, in the present embodiment, the wireless communication apparatus is an apparatus having a function of wireless communication, and corresponds to the base station 20, the terminal device 30, and the terminal device 40 in the example in FIG. 4. In the following description, the wireless communication apparatus may be simply referred to as a communication apparatus.

The communication system 1 may include a plurality of management devices 10, a plurality of base stations 20, a plurality of terminal devices 30, and a plurality of terminal devices 40. In the example in FIG. 1, the communication system 1 includes management devices 10₁ and 10₂ as the management device 10, and includes base stations 20₁, 20₂, 20₃, and the like as the base station 20. Furthermore, the communication system 1 includes terminal devices 30₁, 30₂, 30₃, and the like as the terminal device 30, and includes terminal devices 40₁, 40₂, 40₃, and the like as the terminal device 40.

Note that devices in the drawings may be considered as devices in a logical sense. In other words, a part of the devices in the drawing may be realized by a virtual machine (VM), a container, a docker, or the like, and they may be implemented on physically the same hardware.

Note that the terminal device 30 may support a radio access technology (RAT) such as long term evolution (LTE), new radio (NR), Wi-Fi (registered trademark), or Bluetooth (registered trademark). In this case, the terminal device 30 may be configured to be able to use different radio access technologies (wireless communication systems). For example, the terminal device 30 may be configured to be able to use the NR and the Wi-Fi.

Furthermore, the terminal device 30 may be configured to be able to use different cellular communication technologies (e.g., LTE and NR). The LTE and NR are types of cellular communication technology, and enable mobile communication of a terminal device by arranging a plurality of cellular areas covered by the base station. Note that a radio access method used by the communication system 1 is not limited to the LTE and NR, and may be another radio access method such as wideband code division multiple access (W-CDMA) or code division multiple access 2000 (cdma2000).

Note that, in the following description, the "LTE" includes LTE-Advanced (LTE-A), LTE-Advanced Pro (LTE-A Pro), and evolved universal terrestrial radio access (EUTRA). Still more, the NR includes new radio access technology (NRAT) and further EUTRA (FEUTRA). Note that a single base station may manage a plurality of cells. In the following description, a cell corresponding to the LTE is referred to as an LTE cell, and a cell corresponding to the NR is referred to as an NR cell.

The NR is the radio access technology of a next generation (fifth generation) of the LTE (fourth generation communication including LTE-Advanced and LTE-Advanced Pro). The NR is the radio access technology that can support various use cases including enhanced mobile broadband (eMBB), massive machine type communications (mMTC), and ultra-reliable and low latency communications (URLLC). The NR has been studied aiming at a technical framework corresponding to use scenarios, requirements, arrangement scenarios, and the like in these use cases.

Note that the terminal device 30 may be connectable to a network using the radio access technology (wireless communication system) other than LTE, NR, Wi-Fi, and Bluetooth. For example, the terminal device 30 may be connectable to a network by using low power wide area (LPWA) communication. Furthermore, the terminal device 30 may be connectable to a network using wireless communication of a unique standard.

Here, the LPWA communication is the wireless communication that enables low-power wide-area communication. For example, the LPWA radio is Internet of Things (IoT) wireless communication using a specified low power radio (e.g., 920 MHz band) or an industry-science-medical (ISM) band. Note that the LPWA communication used by the terminal device 30 may conform to the LPWA standards. Examples of the LPWA standards include ELTRES, ZETA, SIGFOX, LoRaWAN, and NB-Iot. It is apparent that the LPWA standards are not limited thereto, and may be other LPWA standards.

Note that one or the plurality of communication paths may include a virtual network. For example, the plurality of communication paths to which the terminal device 30 can be connected may include a virtual network such as a virtual local area network (VLAN) and a physical network such as an IP communication path. In this case, the terminal device 30 may perform route control based on a route control protocol such as open shortest path first (OSPF) or border gateway protocol (BGP).

In addition, the plurality of communication paths may include one or more overlay networks or one or more network slices.

The base station or a relay station configuring the communication system 1 may be a ground station or a non-ground station. The non-ground station may be a satellite station or an aircraft station. When the non-ground station is the satellite station, the communication system 1 may be a bent-pipe (transparent) type mobile satellite communication system.

In the present embodiment, the ground station (also referred to as a ground base station) refers to a base station (including a relay station) installed on the ground. Here, the "ground" is a ground in a broad sense including not only land but also underground, on water, and underwater. Note that, in the following description, the "ground station" may be replaced with a "gateway".

Note that an LTE base station may be referred to as an evolved node B (eNodeB) or an eNB. Further, an NR base station may be referred to as a gNodeB or a gNB. In the LTE and NR, the terminal device (also referred to as a mobile station or a terminal) may be referred to as user equipment (UE). Note that the terminal device is a type of communication apparatus, and is also referred to as a mobile station or a terminal.

In the present embodiment, the concept of the communication apparatus includes not only a portable mobile device (terminal device) such as a mobile terminal but also a device installed in a structure or a mobile body. The structure or the mobile body itself may be regarded as the communication apparatus. In addition, the concept of the communication apparatus also includes the base station and the relay station in addition to the terminal device. The communication apparatus is one type of processor and information processor. Furthermore, the communication apparatus can be rephrased as a transmission device or a reception device.

Hereinafter, a configuration of each device configuring the communication system 1 will be specifically described. Note that the configuration of each device described below is merely an example. The configuration of each device may be different from the following configuration.

### <2-2. Configuration of management device>

Next, a configuration example of the management device 10 will be described.

The management device 10 is an information processor (computer) that manages the wireless network. For example, the management device 10 is an information processor that manages communication of the base station 20. The management device 10 may be, for example, a device having a function as a mobility management entity (MME). The management device 10 may be a device having a function as an access and mobility management function (AMF) and/or a session management function (SMF). Naturally, functions of the management device 10 are not limited to the MME, the AMF, and the SMF. The management device 10 may be a device having a function as a network slice selection function (NSSF), an authentication server function (AUSF), a policy control function (PCF), or a unified data management (UDM). Furthermore, the management device 10 may be a device having a function as a home subscriber server (HSS).

Note that the management device 10 may have a function of the gateway. For example, the management device 10 may have a function as a serving gateway (S-GW) or a packet data network gateway (P-GW). In addition, the management device 10 may have a function of the user plane function (UPF). In this case, the management device 10 may have a plurality of UPFs. In addition, the management device 10 may have a function of a localized service control function (LSCF). The LSCF is a control function newly added in the present embodiment for providing localized services.

The core network includes a plurality of network functions, and each network function may be aggregated into one physical device or distributed to a plurality of physical devices. In other words, the management device 10 can be dispersedly arranged in a plurality of devices. Further, this distributed arrangement may be controlled to be performed dynamically. The base station 20 and the management device 10 configure one network, and provide a wireless communication service to the terminal device 30. The management device 10 is connected to the Internet, and the terminal device 30 can use various services provided via the Internet via the base station 20.

Note that the management device 10 is not necessarily a device configuring the core network. For example, it is assumed that the core network is a wideband code division multiple access (W-CDMA) or code division multiple access 2000 (cdma2000) core network. In this case, the management device 10 may be a device that functions as a radio network controller (RNC).

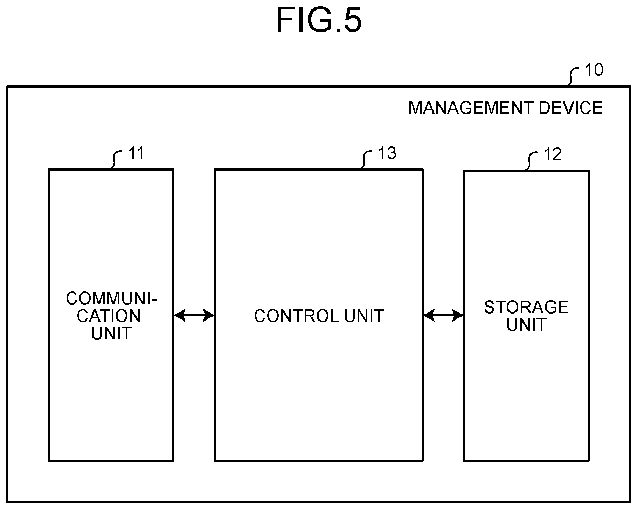

FIG. 5 is a diagram illustrating a configuration example of the management device 10 according to the embodiment of the present disclosure. The management device 10 includes a communication unit 11, a storage unit 12, and a control unit 13. Note that the configuration illustrated in FIG. 5 is a functional configuration, and a hardware configuration may be different from the functional configuration. Furthermore, functions of the management device 10 may be implemented in a statistically or dynamically distributed manner in a plurality of physically separated structures. For example, the management device 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a universal serial bus (USB) interface including a USB host controller and a USB port. Furthermore, the communication unit 11 may be a wired interface or a wireless interface. The communication unit 11 functions as a communication means of the management device 10. The communication unit 11 communicates with the base station 20 and the like under the control of the control unit 13.

The storage unit 12 is a data readable/writable storage device such as a dynamic random access memory (DRAM), a static random access memory (SRAM), a flash memory, or a hard disk. The storage unit 12 stores, for example, a connection state of the terminal device 30. For example, the storage unit 12 stores a radio resource control (RRC) state or a state of an EPS connection management (ECM) or a 5G system connection management (CM) of the terminal device 30. The storage unit 12 may function as a home memory that stores position information of the terminal device 30.

The control unit 13 is a controller that controls each part of the management device 10. The control unit 13 is realized by, for example, a processor such as a central processing unit (CPU), a micro processing unit (MPU), or a graphics processing unit (GPU). For example, the control unit 13 is implemented by a processor executing various programs stored in the storage device inside the management device 10 using a random access memory (RAM) or the like as a work area. Note that the control unit 13 may be realized by an integrated circuit such as an application specific integrated circuit (ASIC) or a field programmable gate array (FPGA). Any of the CPU, the MPU, the GPU, the ASIC, and the FPGA can be regarded as the controller.

### <2-3. Configuration example of base station>

Next, a configuration example of the base station 20 will be described. The base station 20 can be rephrased as a BS 20.

The base station 20 is a wireless communication apparatus that performs wireless communication with the terminal device 30. The base station 20 may be configured to wirelessly communicate with the terminal device 30 via the relay station, or may be configured to wirelessly communicate with the terminal device 30 directly.

The base station 20 is one type of the communication apparatus. The base station 20 is, for example, a device corresponding to a radio base station (e.g., base station, Node B, eNB, and gNB) or a radio access point. The base station 20 may be a wireless relay station. Furthermore, the base station 20 may be an optical extension device called a remote radio head (RRH) or a radio unit (RU). Furthermore, the base station 20 may be a receiving station such as a field pickup unit (FPU). Furthermore, the base station 20 may be an integrated access and backhaul (IAB) donor node or an IAB relay node that provides a radio access line and a radio backhaul line by time division multiplexing, frequency division multiplexing, or space division multiplexing.

Note that the radio access technology used by the base station 20 may be the cellular communication technology or the wireless LAN technology. Obviously, the radio access technology used by the base station 20 is not limited thereto, and may be other radio access technologies. For example, the radio access technology used by the base station 20 may be a low power wide area (LPWA) communication technology. In addition, the wireless communication used by the base station 20 may be wireless communication using millimeter waves. Furthermore, the wireless communication used by the base station 20 may be wireless communication using radio waves or wireless communication (optical) using infrared rays or visible light. The base station 20 may be capable of non-orthogonal multiple access (NOMA) communication with the terminal device 30. Here, the NOMA communication is communication using a non-orthogonal resource (transmission, reception, or both). Note that the base station 20 may be able to perform the NOMA communication with another base station 20.

Note that the base stations 20 may be capable of communicating with each other via a base station-core network interface (e.g., NG Interface and S1 Interface). This interface may be either wired or wireless. Furthermore, the base stations may be capable of communicating with each other via an inter-base station interface (e.g., Xn interface, X2 interface, S1 interface, and F1 interface). This interface may be either wired or wireless.

Note that the concept of the base station includes not only a donor base station but also a relay base station (also referred to as the relay station). For example, the relay base station may be any one of RF repeater, smart repeater, and intelligent surface. In addition, the concept of the base station includes not only a structure having a function of the base station but also a device installed in the structure.

The structure is, for example, a building such as a high-rise building, a house, a steel tower, a station facility, an airport facility, a harbor facility, an office building, a school building, a hospital, a factory, a commercial facility, or a stadium. Note that the concept of the structure includes not only a building but also a non-building structure such as a tunnel, a bridge, a dam, a wall, or an iron pillar, and equipment such as a crane, a gate, or a windmill. In addition, the concept of the structure includes not only a structure on land (on the ground in a narrow sense) or underground, but also a structure on water such as a platform or a megafloat, and a structure under water such as a marine observation facility. The base station can be rephrased as the information processor.

The base station 20 may be a donor station or a relay station. Furthermore, the base station 20 may be a fixed station or a mobile station. The mobile station is a wireless communication apparatus (e.g., base station) configured to be movable. In this case, the base station 20 may be a device installed in the mobile body or may be the mobile body itself. For example, the relay station having mobility can be regarded as the base station 20 as the mobile station. In addition, a device that is originally a device having the mobility and has a function of the base station (at least a part of the function of the base station), such as a vehicle, an unmanned aerial vehicle (UAV) as typified by a drone, or a smartphone, also corresponds to the base station 20 as the mobile station.

Here, the mobile body may be a mobile terminal such as a smartphone or a mobile phone. In addition, the mobile body may be a mobile body that travels on land (ground in a narrow sense) (e.g., vehicle including an automobile, a bicycle, a bus, a truck, a motorcycle, a train, and a linear motor car) or a mobile body (e.g., subway) that travels underground (e.g., inside tunnel). In addition, the mobile body may be a mobile body that travels on water (e.g., ship such as a passenger ship, a cargo ship, or a hovercraft) or a mobile body that moves under water (e.g., submersibles such as a submersible vessel, a submarine, and an unmanned submarine). Note that the mobile body may be a mobile body (e.g., aircraft such as an airplane, an airship, or a drone) that moves in the atmosphere.

Furthermore, the base station 20 may be a ground base station device (ground station) installed on the ground. For example, the base station 20 may be a base station installed in a structure on the ground, or may be a base station installed in a mobile body moving on the ground. More specifically, the base station 20 may be an antenna installed in a structure such as a building and a signal processing device connected to the antenna. Obviously, the base station 20 may be the structure or the mobile body itself. The "ground" in a broad sense includes not only land (ground in a narrow sense) but also underground, on water, and under water. Note that the base station 20 is not limited to the ground base station. For example, when the communication system 1 is a satellite communication system, the base station 20 may be an aircraft station. From the perspective of the satellite station, the aircraft station located on the earth is a ground station.

Note that the base station 20 is not limited to the ground station. The base station 20 may be a non-ground base station (non-ground station) capable of floating in the air or space. For example, the base station 20 may be an aircraft station or a satellite station.

The satellite station is a satellite station capable of floating outside the atmosphere. The satellite station may be a device mounted on a space mobile body such as an artificial satellite, or may be the space mobile body itself. The space mobile body is a mobile body that moves outside the atmosphere. Examples of the space mobile body include artificial bodies such as an artificial satellite, a spacecraft, a space station, and a probe. The satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. Obviously, the satellite station may be a device mounted on the LEO satellite, the MEO satellite, the GEO satellite, or the HEO satellite.

The aircraft station is a wireless communication apparatus capable of floating in the atmosphere, such as an aircraft. The aircraft station may be a device mounted on an aircraft or the like, or may be the aircraft itself. Note that the concept of the aircraft includes not only a heavy aircraft such as an airplane and a glider but also a light aircraft such as a balloon and an airship. In addition, the concept of the aircraft includes not only heavy and light aircrafts but also a rotorcraft such as a helicopter and an autogyroscope. Note that the aircraft station (or the aircraft on which an aircraft station is mounted) may be an unmanned aerial vehicle such as a drone.

Note that the concept of the unmanned aerial vehicle also includes an unmanned aircraft system (UAS) and a tethered UAS. The concept of the unmanned aerial vehicle also includes lighter than air (LTA) UAS and heavier than air (HTA) UAS. Furthermore, the concept of unmanned aerial vehicles also includes high altitude UAS platforms (HAPs).

A coverage of the base station 20 may be large such as a macro cell to small such as a pico cell. It is apparent that a magnitude of the coverage of the base station 20 may be extremely small such as a femto cell. Further, the base station 20 may have a beamforming capability. In this case, the base station 20 may form a cell or a service area for each beam.

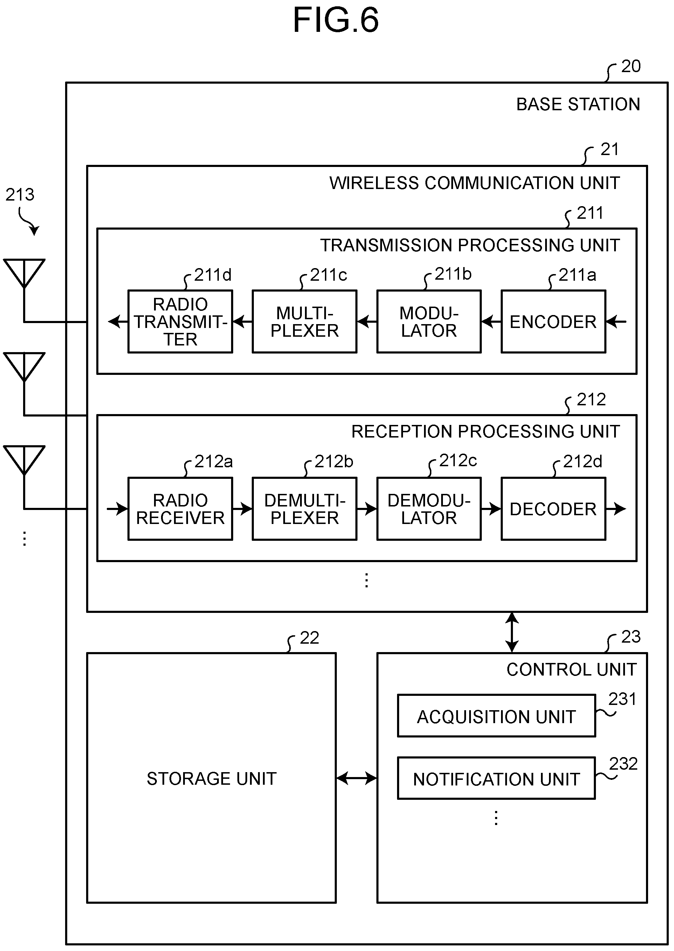

FIG. 6 is a diagram illustrating a configuration example of the base station 20 according to the embodiment of the present disclosure. The base station 20 includes a wireless communication unit 21, a storage unit 22, and a control unit 23. Note that the configuration illustrated in FIG. 6 is a functional configuration, and a hardware configuration may be different from the functional configuration. Furthermore, functions of the base station 20 may be implemented in a distributed manner in a plurality of physically separated configurations.

The wireless communication unit 21 is a signal processing unit for wirelessly communicating with other wireless communication apparatuses (e.g., the terminal device 30, the terminal device 40, and another base station 20). The wireless communication unit 21 operates under the control of the control unit 23. The wireless communication unit 21 corresponds to one or a plurality of radio access methods. For example, the wireless communication unit 21 supports both NR and LTE. The wireless communication unit 21 may be compatible with W-CDMA or cdma2000 in addition to the NR or LTE. Furthermore, the wireless communication unit 21 may support an automatic retransmission technology such as hybrid automatic repeat request (HARQ).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. When the wireless communication unit 21 supports the plurality of radio access methods, each part of the wireless communication unit 21 can be configured individually for each of the radio access methods. For example, the transmission processing unit 211 and the reception processing unit 212 may be individually configured for the LTE and the NR. Furthermore, the antenna 213 may include a plurality of antenna elements (e.g., a plurality of patch antennas). In this case, the wireless communication unit 21 may be configured to be beamformable. The wireless communication unit 21 may be configured to be able to perform polarization beamforming using vertically polarized waves (V-polarized waves) and horizontally polarized waves (H-polarized waves).

The transmission processing unit 211 performs transmission processing of downlink control information and downlink data. The transmission processing unit 211 encodes the downlink control information and the downlink data input from the control unit 23 using an encoding system such as block encoding, convolutional encoding, or turbo encoding. Here, the encoding may be performed by polar code encoding or low density parity check code (LDPC code) encoding. Then, the transmission processing unit 211 modulates coded bits by a predetermined modulation scheme such as BPSK, QPSK, 16QAM, 64QAM, or 256QAM. In this case, signal points on constellation do not necessarily have to be equidistant. The constellation may be a non-uniform constellation (NUC). The transmission processing unit 211 multiplexes a modulation symbol of each channel and a downlink reference signal, and arranges a multiplexed result in a predetermined resource element. Then, the transmission processing unit 211 performs various types of signal processing on a multiplexed signal. For example, the transmission processing unit 211 performs processing such as conversion into a frequency domain by fast Fourier transform, addition of a guard interval, generation of a baseband digital signal, conversion into an analog signal, quadrature modulation, up-conversion, removal of an extra frequency component, and power amplification. A signal generated by the transmission processing unit 211 is transmitted from the antenna 213.

The reception processing unit 212 processes an uplink signal received via the antenna 213. The reception processing unit 212 performs, with respect to the uplink signal, down-conversion, removal of an unnecessary frequency component, control of an amplification level, quadrature demodulation, conversion into a digital signal, removal of a guard interval (cyclic prefix), extraction of a frequency domain signal by fast Fourier transform, and the like. In this case, the reception processing unit 212 separates an uplink channel, such as a physical uplink shared channel (PUSCH) and a physical uplink control channel (PUCCH), and an uplink reference signal from a signal after the above processing is performed. The reception processing unit 212 demodulates a received signal using a modulation scheme such as binary phase shift keying (BPSK) or quadrature phase shift keying (QPSK) with respect to a modulation symbol of the uplink channel. The modulation scheme used for demodulation may be 16-quadrature amplitude modulation (16QAM), 64QAM, or 256QAM. In this case, signal points on constellation do not necessarily have to be equidistant. The constellation may be a non-uniform constellation (NUC). The reception processing unit 212 decodes encoded bits of a demodulated uplink channel. Decoded uplink data and uplink control information are output to the control unit 23.

The antenna 213 is an antenna device (antenna unit) that mutually converts a current and a radio wave. The antenna 213 may include one antenna element (e.g., one patch antenna) or may include a plurality of antenna elements (e.g., a plurality of patch antennas). When the antenna 213 includes a plurality of antenna elements, the wireless communication unit 21 may be configured to be beamformable. For example, the wireless communication unit 21 may be configured to generate a directional beam by controlling the directivity of a radio signal using the plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) to transmit radio signals. Then, the wireless communication unit 21 may control directivity of the radio signal transmitted using the vertically polarized wave and the horizontally polarized wave. Furthermore, the wireless communication unit 21 may transmit and receive spatially multiplexed signals via a plurality of layers including the plurality of antenna elements.

The storage unit 22 is a storage device capable of reading and writing data, such as a DRAM, an SRAM, a flash memory, or a hard disk. The storage unit 22 functions as a storage means of the base station 20.

The control unit 23 is a controller that controls each unit of the base station 20. The control unit 23 is realized by, for example, a processor such as the CPU or the MPU. For example, the control unit 23 is realized by a processor executing various programs stored in the storage device inside the base station 20 using the RAM or the like as a work area. Note that the control unit 23 may be realized by an integrated circuit such as the ASIC or the FPGA. Any of the CPU, the MPU, the ASIC, and the FPGA can be regarded as the controller. Furthermore, the control unit 23 may be realized by the GPU in addition to or instead of the CPU.

As illustrated in FIG. 6, the control unit 23 includes an acquisition unit 231 and a notification unit 232. Each block (acquisition unit 231 to notification unit 232) configuring the control unit 23 is a functional block indicating a function of the control unit 23. These functional blocks may be software blocks or hardware blocks. For example, each of the functional blocks described above may be one software module realized by software (including microprogram), or may be one circuit block on a semiconductor chip (die). It is apparent that each functional block may be one processor or one integrated circuit. Note that the control unit 23 may be configured by a functional unit different from the above-described functional blocks. A configuration method of the functional blocks is arbitrary. The operation of each block of the control unit 23 may be the same as the operation of each block of the control unit 33 of the terminal device 30. Furthermore, the operation of each block of the control unit 23 may be the same as the operation of each block of the control unit 43 of the terminal device 40.

In the present embodiment, the base station may be configured by a set of a plurality of physical or logical devices. For example, in this embodiment, the base station may be distinguished into a plurality of devices such as a baseband unit (BBU) and a radio unit (RU). Then, the base station may be interpreted as an assembly of the plurality of devices. In addition, the base station may be either or both of the BBU and the RU. The BBU and the RU may be connected by a predetermined interface (e.g., enhanced common public radio interface (eCPRI)). The RU may be rephrased as a remote radio unit (RRU) or a radio DoT (RD). Furthermore, the RU may correspond to a gNB distributed unit (gNB-DU) described later. Further, the BBU may correspond to a gNB central unit (gNB-CU) described later. Alternatively, the RU may be a wireless device connected to the gNB-DU described later. The gNB-CU, the gNB-DU, and the RU connected to the gNB-DU may be configured to conform to an open radio access network (O-RAN). Further, the RU may be a device integrally formed with the antenna. An antenna (e.g., antenna integrally formed with RU) included in the base station may adopt an advanced antenna system and support MIMO (e.g., full dimension (FD)-MIMO) or beamforming. Furthermore, the antenna included in the base station may include, for example, 64 transmission antenna ports and 64 reception antenna ports.

In addition, the antenna mounted on the RU may be an antenna panel including one or more antenna elements, and the RU may be mounted with one or more antenna panels. For example, the RU may be mounted with two antenna panels of a horizontally polarized antenna panel and a vertically polarized antenna panel, or two antenna panels of a clockwise circularly polarized antenna panel and a counterclockwise circularly polarized antenna panel. In addition, the RU may form and control an independent beam for each antenna panel.

Note that a plurality of base stations may be connected to each other. The one or more base stations may be included in a radio access network (RAN). In this case, the base station may be simply referred to as a RAN, a RAN node, an access network (AN), or an AN node. Note that the RAN in the LTE is sometimes referred to as an enhanced universal terrestrial RAN (EUTRAN). In addition, the RAN in the NR may be referred to as NGRAN. In addition, the RAN in the W-CDMA (UMTS) is sometimes referred to as UTRAN.

Note that an LTE base station may be referred to as an evolved node B (eNodeB) or an eNB. In this case, the EUTRAN includes one or more eNodeBs (eNBs). Further, an NR base station may be referred to as a gNodeB or a gNB. In this case, the NGRAN includes one or more gNBs. The EUTRAN may include the gNB (en-gNB) connected to the core network (EPC) in an LTE communication system (EPS). Similarly, the NGRAN may include an ng-eNB connected to a core network 5GC in a 5G communication system (5GS).

When the base station is the eNB, the gNB, or the like, the base station may be referred to as a 3GPP access. In addition, when the base station is the radio access point, the base station may be referred to as a non-3GPP access. Further, the base station may be an optical extension device called a remote radio head (RRH) or a radio unit (RU). Furthermore, in a case where the base station is the gNB, the base station may be a combination of the gNB-CU and the gNB-DU described above, or may be any one of the gNB-CU and the gNB-DU.

Here, the gNB-CU hosts a plurality of upper layers (e.g., radio resource control (RRC), service data adaptation protocol (SDAP), and packet data convergence protocol (PDCP)) in an access stratum for communication with the UE. On the other hand, the gNB-DU hosts a plurality of lower layers (e.g., radio link control (RLC), medium access control (MAC), and physical layer (PHY) in an access stratum. In other words, among messages/information to be described later, RRC signaling (semi-static notification) may be generated by the gNB-CU, while MAC CE and DCI (dynamic notification) may be generated by the gNB-DU. Alternatively, in the RRC configuration (semi-static notification), for example, some configurations such as IE: cellGroupConfig may be generated by the gNB-DU, and the remaining configurations may be generated by the gNB-CU. These configurations may be transmitted and received through an F1 interface described later.

Note that the base station may be configured to be able to communicate with another base station. For example, when a plurality of base stations is the eNBs or a combination of the eNB and the en-gNB, the base stations may be connected by an X2 interface. Furthermore, in a case where a plurality of base stations are the gNBs or a combination of the gn-eNB and the gNB, the devices may be connected by an Xn interface. Furthermore, in a case where a plurality of base stations is a combination of the gNB-CU and the gNB-DU, the devices may be connected by the above-described F1 interface. A message/information (e.g., RRC signaling, MAC control element (MAC CE), or DCI) to be described later may be transmitted between a plurality of base stations, for example, via the X2 interface, the Xn interface, or the F1 interface.

The cell provided by the base station is referred to as, for example, a serving cell. The serving cell may include a primary cell (PCell) and a secondary cell (SCell). When dual connectivity is configured for the UE (e.g., terminal device 30), the PCell provided by a master node (MN) and zero or one or more SCells may be referred to as a master cell group. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity.

Further, the serving cell may include a primary secondary cell (PSCell) or primary SCG cell. In other words, when the dual connectivity is set to the UE, the PSCell provided by the secondary node (SN) and zero or one or more SCells are referred to as a secondary cell group (SCG). Unless specially configured (e.g., PUCCH on SCell), a physical uplink control channel (PUCCH) is transmitted in the PCell and the PSCell, but is not transmitted in the SCell. In addition, a radio link failure is also detected in the PCell and the PSCell, but is not detected in the SCell (may not be detected). As described above, since the PCell and the PSCell have a special role in the serving cell, they are also referred to as a special cell (SpCell).

In one cell, one downlink component carrier and one uplink component carrier may be associated. Further, a system bandwidth corresponding to one cell may be divided into a plurality of bandwidth parts (BWP). In this case, one or more BWPs may be set to the UE, and the UE may use one BWP as an active BWP. In addition, radio resources that can be used by the terminal device 30 (e.g., frequency bandwidth, numerology (subcarrier spacing), and slot configuration) may be different for each cell, each component carrier, or each BWP.

### <2-4. Configuration of first terminal device>

Next, a configuration of the terminal device 30 (first terminal device) will be described. The terminal device 30 can be rephrased as user equipment (UE) 30.

As described above, the terminal device 30 is the first terminal device capable of performing communication based on the first sidelink communication scheme. For example, the terminal device 30 is a URLLC terminal. Here, the URLLC terminal is a terminal device capable of performing communication based on a sidelink communication scheme allowing signals from a plurality of terminal devices to exist in one radio resource of one slot. Note that the terminal device 30 may use the second sidelink communication scheme in addition to the first sidelink communication scheme.

Any form of computer can be employed as the terminal device 30. The terminal device 30 may be a mobile terminal such as a mobile phone, a smart device (smartphone or tablet), a personal digital assistant (PDA), or a notebook PC. Furthermore, the terminal device 30 may be an imaging device (e.g., camcorder) having a communication function. Furthermore, the terminal device 30 may be a motorcycle, a mobile relay car, or the like on which the communication device such as the FPU is mounted. Furthermore, the terminal device 30 may be a machine-to-machine (M2M) device or an Internet of Things (IoT) device. Still more, the terminal device 30 may be a wearable device such as a smart watch.

Still more, the terminal device 30 may be an xR device such as an augmented reality (AR) device, a virtual reality (VR) device, and a mixed reality (MR) device. At this time, the xR device may be an eyewear device such as AR glasses and MR glasses, or may be a head-mounted device such as a VR head-mounted display. When the terminal device 30 is the xR device, the terminal device 30 may be a standalone device including only a user wearing part (e.g., eyewear part). Furthermore, the terminal device 30 may be a terminal interlocking device including a user wearing part (e.g., eyewear part) and a terminal part (e.g., smart device) interlocked with the user wearing part.

Note that the terminal device 30 may be configured to be connectable to a plurality of communication paths. For example, the terminal device 30 may be configured to be connectable to two communication paths of the Wi-Fi (registered trademark) and the cellular network. The terminal device 30 may be connectable to a plurality of cellular networks. At this time, the plurality of cellular networks may be associated with different subscriber identity modules (SIMs).

Note that the terminal device 30 may be configured to be able to switch and use a plurality of SIM cards. For example, the terminal device 30 may be compatible with dual SIM or triple SIM. Obviously, the terminal device 30 may be configured to be able to insert more than three SIM cards. Furthermore, the terminal device 30 may be a remote SIM provisioning (RSP). For example, the terminal device 30 may be compatible with an embedded SIM (eSIM). The RSP-compatible terminal device can rewrite information regarding wireless communication (hereinafter referred to as a profile) without replacing a SIM card.

Note that the terminal device 30 may be capable of performing NOMA communication with the base station 20. Furthermore, the terminal device 30 may be capable of using an automatic retransmission technology such as HARQ when communicating with the base station 20. Further, the terminal device 30 may be capable of performing sidelink communication with another terminal device 30. The terminal device 30 may also be capable of using an automatic retransmission technology such as HARQ when performing the sidelink communication. Note that the terminal device 30 may also be capable of the NOMA communication in communication (sidelink) with other terminal devices 30. Furthermore, the terminal device 30 may be capable of performing LPWA communication with other communication apparatuses (e.g., base station 20 and other terminal devices 30). Furthermore, wireless communication used by the terminal device 30 may be wireless communication using millimeter waves. Note that the wireless communication (including the sidelink communication) used by the terminal device 30 may be wireless communication using radio waves or wireless communication (optical) using infrared rays or visible light.

Furthermore, the terminal device 30 may be a mobile device. The mobile device is a mobile wireless communication apparatus. In this case, the terminal device 30 may be the wireless communication apparatus installed in the mobile body or may be the mobile body itself. For example, the terminal device 30 may be a vehicle that moves on a road, such as an automobile, a bus, a truck, or a motorcycle, or a wireless communication apparatus mounted on the vehicle. Note that the mobile body may be a mobile terminal, or may be the mobile body that travels on land (on the ground in a narrow sense), underground, on water, or under water. Furthermore, the mobile body may be a mobile body that travels in the atmosphere, such as a drone or a helicopter, or may be a mobile body that travels outside the atmosphere such as an artificial satellite.

The terminal device 30 may be simultaneously connected to a plurality of base stations or a plurality of cells to perform communication. For example, when one base station supports a communication area via a plurality of cells (e.g., pCell and sCell), it is possible to bundle the plurality of cells and communicate between the base station 20 and the terminal device 30 by a carrier aggregation (CA) technology, a dual connectivity (DC) technology, or a multi-connectivity (MC) technology. Alternatively, the terminal device 30 and the plurality of base stations 20 can communicate with each other by a coordinated multipoint transmission and reception (CoMP) technology via cells of different base stations 20.

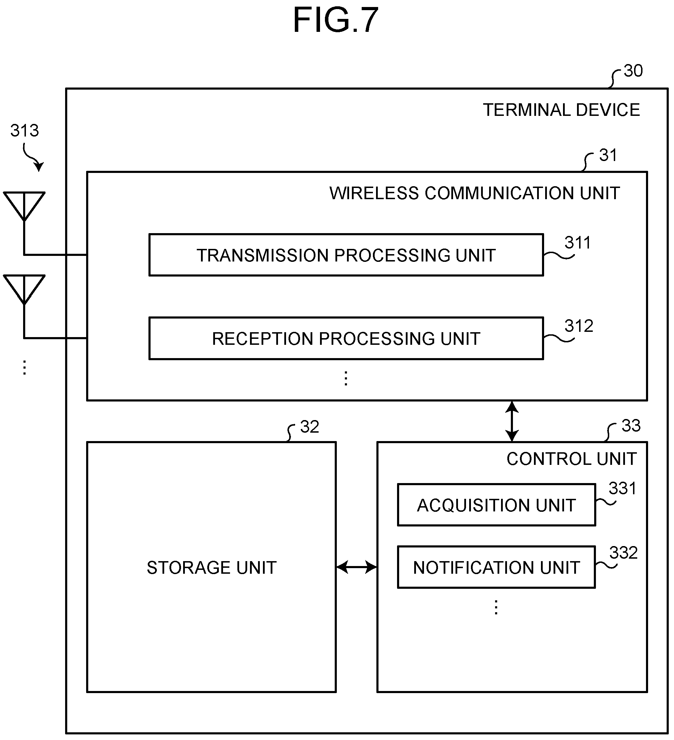

FIG. 7 is a diagram illustrating a configuration example of the terminal device 30 according to the embodiment of the present disclosure. The terminal device 30 includes a wireless communication unit 31, a storage unit 32, and a control unit 33. Note that the configuration illustrated in FIG. 7 is a functional configuration, and a hardware configuration may be different from the functional configuration. Furthermore, functions of the terminal device 30 may be implemented in a distributed manner in a plurality of physically separated structures.

The wireless communication unit 31 is a signal processing unit for wirelessly communicating with other wireless communication apparatuses (e.g., base station 20, terminal device 40, and other terminal devices 30). The wireless communication unit 31 operates under the control of the control unit 33. The wireless communication unit 31 includes a transmission processing unit 311, a reception processing unit 312, and an antenna 313. Configurations of the wireless communication unit 31, the transmission processing unit 311, the reception processing unit 312, and the antenna 313 may be similar to those of the wireless communication unit 21, the transmission processing unit 211, the reception processing unit 212, and the antenna 213 of the base station 20. Further, the wireless communication unit 31 may be configured to be beamformable similarly to the wireless communication unit 21. Further, similarly to the wireless communication unit 21, the wireless communication unit 31 may be configured to be capable of transmitting and receiving spatially multiplexed signals.

The storage unit 32 is a storage device capable of reading and writing data, such as the DRAM, the SRAM, the flash memory, or the hard disk. The storage unit 32 functions as a storage means of the terminal device 30.

The control unit 33 is a controller that controls each part of the terminal device 30. The control unit 33 is realized by, for example, a processor such as the CPU or the MPU. For example, the control unit 33 is realized by a processor executing various programs stored in a storage device inside the terminal device 30 using the RAM or the like as a work area. Note that the control unit 33 may be realized by an integrated circuit such as the ASIC or the FPGA. Any of the CPU, the MPU, the ASIC, and the FPGA can be regarded as the controller. Furthermore, the control unit 33 may be realized by the GPU in addition to or instead of the CPU.

As illustrated in FIG. 7, the control unit 33 includes an acquisition unit 331 and a notification unit 332. Each block (acquisition unit 331 to notification unit 332) configuring the control unit 33 is a functional block indicating a function of the control unit 33. These functional blocks may be software blocks or hardware blocks. For example, each of the functional blocks described above may be one software module realized by software (including microprogram), or may be one circuit block on a semiconductor chip (die). It is apparent that each functional block may be one processor or one integrated circuit. The control unit 33 may be configured by a functional unit different from the above-described functional blocks. A configuration method of the functional blocks is arbitrary. The operation of each block of the control unit 33 may be the same as the operation of each block of the control unit 23 of the base station 20. Furthermore, the operation of each block of the control unit 33 may be the same as the operation of each block of the control unit 43 of the terminal device 40.

### <2-5. Configuration of second terminal device>

Next, a configuration of the terminal device 40 (second terminal device) will be described. The terminal device 40 can be rephrased as user equipment (UE) 40.

As described above, the terminal device 40 is the second terminal device that performs communication based on the second sidelink communication scheme different from the first sidelink communication scheme. For example, the terminal device 40 is a URLLC terminal. Here, the non-URLLC terminal is a terminal device capable of performing communication based on a sidelink communication scheme in which a signal from one terminal device exists in one radio resource of one slot. Other configurations of the terminal device 40 are similar to those of the terminal device 30. For example, as the terminal device 40, any form of computer such as a mobile terminal, an imaging device, an M2M device, an IoT device, a wearable device, or an xR device can be employed similarly to the terminal device 30.

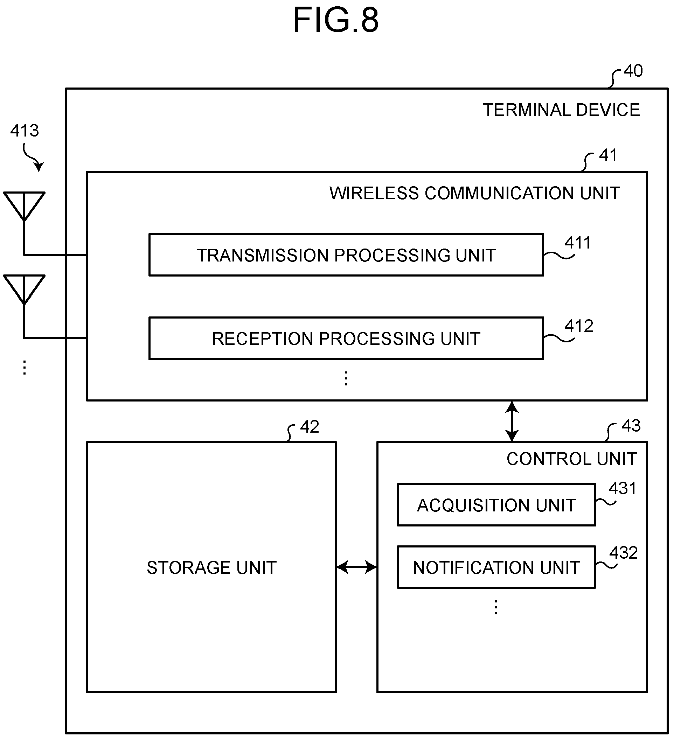

FIG. 8 is a diagram illustrating a configuration example of the terminal device 40 according to the embodiment of the present disclosure. The terminal device 40 includes a wireless communication unit 41, a storage unit 42, and a control unit 43. Note that the configuration illustrated in FIG. 8 is a functional configuration, and a hardware configuration may be different from the functional configuration. Furthermore, functions of the terminal device 40 may be implemented in a distributed manner in a plurality of physically separated configurations.

The wireless communication unit 41 is a signal processing unit for wirelessly communicating with other wireless communication apparatuses (e.g., base station 20, terminal device 30, and other terminal devices 40). The wireless communication unit 41 operates under the control of the control unit 43. The wireless communication unit 41 includes a transmission processing unit 411, a reception processing unit 412, and an antenna 413. These configurations may be similar to the wireless communication unit 31, the transmission processing unit 311, the reception processing unit 312, and the antenna 313 of the terminal device 30.

The storage unit 42 is a storage device capable of reading and writing data, such as a DRAM, an SRAM, a flash memory, or a hard disk. The storage unit 42 functions as a storage means of the terminal device 40.

The control unit 43 is a controller that controls each part of the terminal device 40. The configuration of the control unit 43 is similar to that of the control unit 33 of the terminal device 30. As illustrated in FIG. 8, the control unit 43 includes an acquisition unit 431 and a notification unit 432. Each block (acquisition unit 431 to notification unit 432) configuring the control unit 43 is a functional block indicating a function of the control unit 43. These functional blocks may be software blocks or hardware blocks. For example, each of the functional blocks described above may be one software module realized by software (including microprogram), or may be one circuit block on a semiconductor chip (die). It is apparent that each functional block may be one processor or one integrated circuit. Note that the control unit 43 may be configured by a functional unit different from the above-described functional blocks. A configuration method of the functional blocks is arbitrary.

The operation of each block of the control unit 43 may be the same as the operation of each block of the control unit 23 of the base station 20. Furthermore, the operation of each block of the control unit 43 may be the same as the operation of each block of the control unit 33 of the terminal device 30. Other configurations of the terminal device 40 may be the same as those of the terminal device 30.

### <<3. Sidelink communication>>

The configuration of the communication system 1 has been described above, and the sidelink communication will be described before describing the operation of the communication system 1. In the following description, the UE may be the terminal device 30 or the terminal device 40. Further, the BS may be the base station 20.

### <3-1. Outline of sidelink communication>

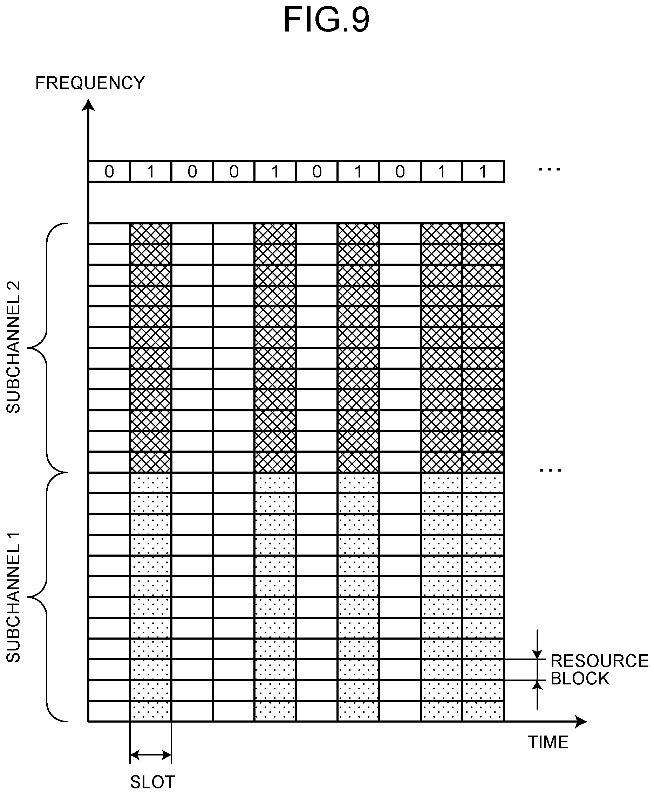

FIG. 9 is a diagram illustrating an outline of the sidelink communication. Use cases of the sidelink communication are roughly divided into two. The first is a case where two or more UEs exist inside a cell C configured by the BS. The second is a case where at least one of the two or more UEs exists inside the cell C, and other UEs exist outside the cell C. At this time, the UE existing inside the cell C may communicate with the BS in addition to the sidelink communication. As a result, the UE existing inside the cell C functions as a relay station that relays the BS and the UE existing outside the cell C.

When the UE exists inside the cell C, it can be said that the UE is in a state in which a quality of a downlink signal received from the BS is equal to or higher than a predetermined standard. In other words, when the UE exists outside the cell C, it can be said that the UE is in a state in which the quality of the downlink signal received from the BS is equal to or less than the predetermined standard. In addition, when the UE exists inside the cell C, it can be said that the UE is in a state in which a predetermined downlink channel received from the BS can be decoded with a predetermined probability or more. In other words, when the UE exists outside the cell C, it can be said that the UE is in a state in which the predetermined downlink channel received from the BS cannot be decoded with a predetermined probability or more.

In the following description, the UE that receives information regarding the sidelink communication from the base station and transmits a sidelink control channel may be referred to as the transmission device, and other UEs may be referred to as the reception device.

### <3-2. Details of sidelink communication>

The sidelink communication is direct communication between a UE and a UE different from the UE. In the sidelink communication, a resource pool is set in the UE. The resource pool is candidate time and frequency resource used for sidelink transmission and reception. The UE selects resources for sidelink transmission and reception from the resource pool and performs the sidelink communication. Since the sidelink communication is performed using uplink resources (uplink subframe and uplink component carrier), the resource pool is also set in an uplink subframe or an uplink component carrier.

A sidelink physical channel includes a physical sidelink control channel (PSCCH), a physical sidelink shared channel (PSSCH), and a physical sidelink feedback channel (PSFCH).

As described above, the frame configuration used in the conventional sidelink communication scheme is the configuration illustrated, for example, in FIGS. 1 and 2. FIG. 1 illustrates the sidelink frame configuration when the PSCCH has the two-symbol configuration, the DMRS has the two-symbol allocation, and there is no PSFCH. In addition, FIG. 2 illustrates the sidelink frame configuration when the PSCCH has the three-symbol configuration, the DMRS has the three-symbol allocation, and there is the PSFCH.

The PSCCH is used to transmit sidelink control information (SCI). The PSCCH includes two symbols or three symbols. Mapping of information bits of the sidelink control information is defined as an SCI format. The sidelink control information includes a sidelink grant. The sidelink grant is used for scheduling the PSSCH.

The PSSCH is used to transmit sidelink data (sidelink shared channel (SL-SCH: )). The PSSCH may also be used to transmit control information of an upper layer.

The PSFCH is used to feed back, to the transmission device, a HARQ response (HARQ-ACK or ACK/NACK) to a PSSCH decoding result. The PSFCH is arranged in the 13th symbol. Resources of the PSFCH may not be allocated to all slots. In that case, the resources may be utilized as the PSSCH.

The sidelink frame configuration includes an AGC symbol. The AGC symbol may be used for automatic gain control (AGC) of a reception terminal device. The AGC symbol is located in the first symbol of transmission. Specifically, the AGC symbol is arranged in the first symbol when the PSSCH is transmitted, and arranged in the 12th symbol when the PSFCH is transmitted. The AGC symbol is generated by copying the second symbol of transmission. In other words, in the sidelink transmission, the first symbol and the second symbol of the transmission are the same. The sidelink frame configuration includes a guard symbol. The sidelink, transmission and reception are switched by the guard symbol (guard time). The guard symbol is arranged in the 14th symbol. Further, in the slot in which the PSFCH is transmitted, the guard symbol is also arranged in the 11th symbol.

The resource pool is set from the BS to the UE by an SIB or a dedicated RRC message. Alternatively, the resource pool is set by information regarding a resource pool preset in the UE. A time resource pool is indicated by period information, offset information, and subframe bitmap information. A frequency resource pool is indicated by a start position of the resource block, an end position of the resource block, and the number of consecutive resource blocks.

### <3-3. Sidelink resource pool>

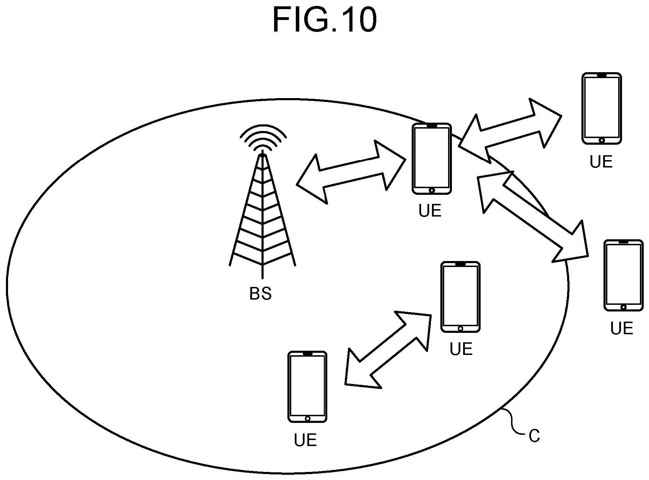

FIG. 10 is a diagram illustrating a sidelink resource pool. In the sidelink, a resource pool (sidelink resource pool) is set as a resource used for transmission of the PSSCH and reception of the PSSCH. In a frequency axis, the resource pool is configured with one or more consecutive subchannels. A subchannel includes one or more consecutive physical resource blocks (PRBs). The number of subchannels and the size of the subchannel are set by upper-layer parameters.

The subchannel is used as a resource allocation unit of the frequency axis in the sidelink. A subchannel assignment of the sidelink transmission is determined by the frequency resource assignment included in the SCI. Subchannels are indexed in ascending order of frequency

The slot set as the resource pool is indicated by a bitmap. Each bit of the bitmap corresponds to a slot that can be set as the sidelink resource pool. For example, when a bit value is 1, a corresponding slot is set as a resource pool. When a bit value is 0, a corresponding slot is not set as the resource pool. A bitmap length is set by an upper layer.

A slot including a sidelink-synchronization signal (S-SS)/physical sidelink broadcast channel (PSBCH) block is not set as the resource pool. Further, a slot that does not semi-statically include a predetermined number of uplink symbols is not set as the resource pool. In addition, a reserved slot is not set as the resource pool.

Note that a device for setting the resource pool may be a device other than the BS. Examples of the device other than the BS include a representative UE (primary terminal device or master terminal device).

### <3-4. Sidelink resource allocation method>

As a sidelink resource allocation method, there are a sidelink resource allocation mode 1 and a sidelink resource allocation mode 2. The resource allocation mode 1 is a method in which the BS allocates a resource for the UE to transmit data on a sidelink physical channel (PSCCH or PSSCH). The resource allocation mode 2 is a method in which the UE itself performs sensing and selects a resource for the UE to transmit data on the sidelink physical channel. Hereinafter, these resource allocation modes will be described in detail.

### (1) Resource allocation mode 1

In the resource allocation mode 1, when a transmission packet occurs in the UE, the BS selects and allocates, from the resource pool, a resource to be used for transmission of the packet.

In the resource allocation mode 1, the resource used for sidelink transmission is designated by the dynamic grant or RRC signaling transmitted from the BS. Specifically, in the resource allocation mode 1, the dynamic grant, a configured grant type 1, and a configured grant type 2 are supported for PSSCH transmission and PSCCH transmission. In the sidelink dynamic grant, the PSSCH transmission is scheduled by DCI format 3_0. In the sidelink configured grant type 1, a resource for PSSCH transmission is allocated by the RRC signaling. In the sidelink configured grant type 2, the configured grant is activated by DCI format 3_0. Then, the PSSCH transmission is performed using the resource designated by the RRC signaling.

In the resource allocation mode 1, since the resource is allocated by the BS every time a transmission packet occurs, a collision frequency between sidelink communications can be reduced. On the other hand, large signaling overhead is required between the BS and the UE.

### (2) Resource allocation mode 2

In the resource allocation mode 2, a resource pool is pre-allocated to the UE. Alternatively, in the resource allocation mode 2, the resource pool is allocated by the BS/network.

In the resource allocation mode 2, the UE can select the sidelink resource in the resource selection window or reserve a future sidelink resource based on a measurement result of an interference pattern in the sensing window and the sideilnk resource reservation status in the sensing window. By using the prediction result, the UE can select or reserve the sidelink resource that can be used for transmission of the packet, i.e., the sidelink resource that is predicted not to be used for transmission of another packet.

In the resource allocation mode 2, small signaling overhead is required between the BS and the UE but packet collision may occur.

In the resource allocation mode 2, resource allocation modes are classified into the following four types.
· Resource allocation mode 2 (a)
· Resource allocation mode 2 (b)
· Resource allocation mode 2 (c)
· Resource allocation mode 2 (d)

The resource allocation mode 2 (a) is a mode in which the UE autonomously selects the transmission sidelink resource. The resource allocation mode 2 (b) is a mode in which the UE assists sidelink resource selection of another transmission terminal. The resource allocation mode 2 (c) is a mode in which sidelink transmission is performed by the configured grant. The resource allocation mode 2 (d) is a mode in which the terminal device schedules sidelink transmission of another UE.

Hereinafter, the above four types of resource allocation modes will be described in detail.

### · Resource allocation mode 2 (a)

In the resource allocation mode 2 (a), when a packet occurs in the UE, the UE autonomously selects a sidelink resource to be used for transmitting the packet from the resource pool. The UE that transmits the packet first performs sensing to find a sidelink resource to be used for transmitting the packet from the resource pool. Next, the UE selects a sidelink resource from the resource pool based on a result of the sensing. Then, the UE transmits the packet using the sidelink resource selected. Further, at this time, the UE reserves a sidelink resource to be used for subsequent packet transmission as necessary. The resource allocation mode 2 (a) can be applied to both a semi-persistent method in which a resource is selected for a plurality of sidelink transmissions with different transport blocks and a dynamic method in which a resource is selected each time for sidelink transmission of each transport.

### · Resource allocation mode 2 (b)

In the resource allocation mode 2 (b), the UE assists selection of sidelink resources of other transmission terminals.

### · Resource allocation mode 2 (c)

In the resource allocation mode 2 (c), a sidelink transmission pattern is set in the UE. The UE selects a sidelink resource to be used for transmission according to the sidelink transmission pattern set. The sidelink transmission pattern is defined by time, a frequency resource size and position, and the number of resources. A plurality of sidelink transmission patterns can be set. When only one sidelink transmission pattern is set, the UE does not perform sensing. On the other hand, when a plurality of sidelink transmission patterns is set, the UE performs sensing and selects a sidelink transmission pattern based on a sensing result. In the out-of-coverage operation, one or more sidelink transmission patterns defined in each sidelink resource pool are set in advance. In addition, in the in-coverage operation, one or a plurality of sidelink transmission patterns defined in each sidelink resource pool is set from the BS.

### · Resource allocation mode 2 (d)

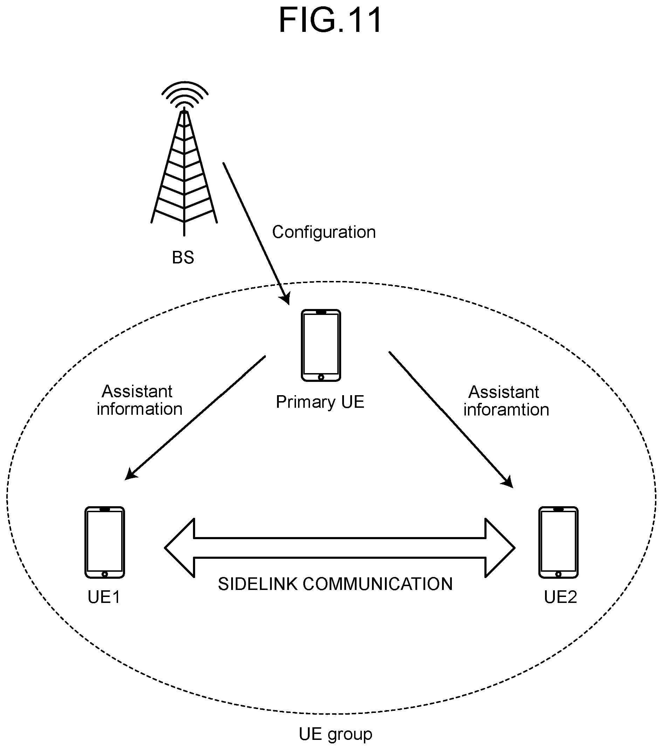

The resource allocation mode 2 (d) is applied in group-based sidelink communication including three or more UEs. FIG. 11 is a diagram illustrating the resource allocation mode 2 (d). In the group, a representative UE(master terminal device or primary terminal device) is defined. The representative UE reports information on other UEs (slave terminal device, secondary terminal device, or member terminal device) in the group to the BS. The BS provides the resource pool setting and the resource setting of each UE in the group via the representative UE. In resource allocation mode 2 (d), since the member UE does not require a direct connection with the BS, the signaling overhead of a Uu link (communication link between the BS and the UE) can be reduced. The UE that can be the representative UE and the function that can be provided depend on the capability of the UE. The representative UE can provide predetermined assist information to member UEs. Examples of the assist information include resource pool setting, collision information, COT sharing information, CSI, and information on a degree of congestion.

### <3-5. Sensing in sidelink communication>

In the resource allocation mode 2, a sensing procedure is supported. SCI decoding from an other UE and/or measurement of sidelink resources are used as sensing in the sidelink communication.

In the sensing by the SCI decoding, the UE acquires information on the sidelink resource to be used included in the SCI transmitted from the other UE. Based on the information from the SCI, the UE determines the sidelink resource to be used for transmission while avoiding resources scheduled to be used by the other UE.

In the sensing based on measurement of the sidelink resource, the UE measures a layer 1 (L1) sidelink reference signal received power (RSRP) based on sidelink demodulation RS (DMRS). When the measured RSRP is higher than a predetermined threshold, the UE recognizes that the measured sidelink resource is used for transmission by another UE, and determines a sidelink resource to be used for transmission while avoiding the use of the measured sidelink resource.

In this way, the UE selects or reselects the sidelink resource based on a result of the sensing procedure described above.

### <3-6. Sidelink communication of the present embodiment>

The sidelink communication as the conventional operation in the present embodiment may be based on the radio access methods of LTE V2X and NR V2X. Here, in the present embodiment, one sidelink transmission is understood as a group of sidelink channels and/or signals transmitted from a certain transmission terminal (Tx UE) to a predetermined reception terminal (Rx UE) by unicast, groupcast, or broadcast. In other words, in the example in FIG. 1, AGC, PSCCH, PSSCH, DMRS, and GUARD transmitted in all symbols in one slot are one sidelink transmission in the conventional operation. In the example in FIG. 2, AGC, PSCCH, PSSCH, DMRS, and GUARD transmitted in the first to 11th symbols in one slot are one sidelink transmission, and AGC, PSFCH, and GUARD transmitted in the 12h to 14th symbols in one slot are one sidelink transmission. Note that the same transmission terminal (Tx UE) can continuously perform a plurality of sidelink transmissions. In this case, these transmissions are different sidelink transmissions.

### <<4. Operation of communication system>>

The sidelink communication has been described above, and the operation of the communication system 1 will be described below.

### <4-1. Outline of operation of communication system>

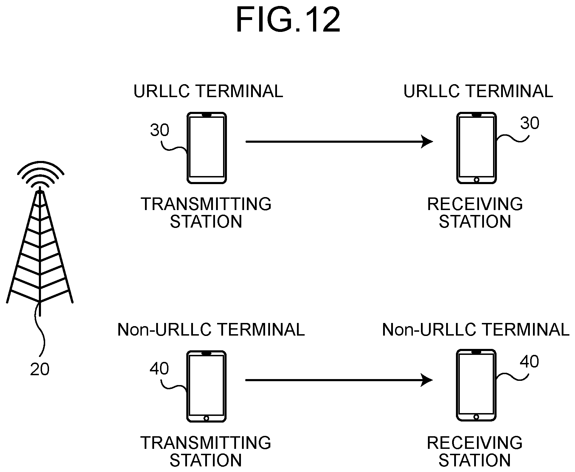

FIG. 12 is a diagram illustrating an example of a communication environment assumed in the present embodiment. In the present embodiment, as an example, it is assumed that the first terminal device (terminal device 30) is the URLLC terminal, and the second terminal device (terminal device 40) is the non-URLLC terminal. Then, in the present embodiment, it is assumed that the transmitting station and the receiving station of each of the URLLC terminal and the non-URLLC terminal exist in one environment.

Each sidelink terminal performs the sidelink communication while receiving assistance such as synchronization from the base station 20. The transmitting station and the receiving station of the URLLC terminal perform the sidelink communication based on the sidelink communication scheme (e.g., communication scheme not dependent on the slot boundary) in which signals from a plurality of terminal devices can exist in one radio resource of one slot. In addition, the transmitting station and the receiving station of the non-URLLC terminal perform the sidelink communication based on the sidelink communication scheme (e.g., communication scheme according to the slot boundary) in which a signal from one terminal device exists in one radio resource of one slot. Note that the transmitting station and the receiving station are communication apparatuses that perform transmission or reception at that timing. The transmitting station and the receiving station may be switched depending on an observation timing.

Note that, in the following description, the sidelink communication scheme (side link communication scheme in which signals from the plurality of terminal devices can exist in one radio resource of one slot) used by the transmitting station and the receiving station of the URLLC terminal may be referred to as the first sidelink communication scheme, but the first sidelink communication scheme is not limited to this example. In addition, the sidelink communication scheme (side link communication scheme in which signals from a plurality of terminal devices exist in one radio resource of one slot) used by the transmitting station and the receiving station of the non-URLLC terminal may be referred to as the second sidelink communication scheme, but the second sidelink communication scheme is not limited to this example.

First, the URLLC terminal acquires control information (hereinafter also referred to as first control information) regarding a signal transmitted based on the first sidelink communication scheme. For example, the URLLC terminal performs the sensing operation for URLLC control information (first control information). The URLLC terminal performs the sensing operation while not performing transmission. Note that the URLLC terminal may be configured to perform the sensing operation also while performing the transmission. Here, the sensing operation refers to an operation in which a terminal device receives a control signal transmitted by an other terminal device and acquires control information therein. With this operation, the terminal device can know the use state of the radio resource of the other terminal device.

When traffic occurs, the transmitting station of the URLLC terminal selects a radio resource to be used for sidelink transmission based on schedule information of another URLLC terminal sensed so far. Thereafter, the transmitting station of the URLLC terminal generates the first control information based on the information of the selected resource, and arranges and transmits the generated first control information at a predetermined radio resource position. At this time, the transmitting station of the URLLC terminal may transmit the first control information in a form of being included in the radio resource for transmitting the URLLC traffic. Furthermore, the transmitting station of the URLLC terminal may transmit the first control information by using a radio resource different from the radio resource for transmitting the URLLC traffic.

In the present embodiment, the transmitting station of the URLLC terminal generates the second control information regarding the first control information. The second control information may include, for example, information (information regarding the first control information) on a resource selected by the transmitting station of the URLLC terminal for the sidelink transmission of the URLLC signal. Furthermore, the second control information may include information on a transmission timing of a signal transmitted by the URLLC terminal based on the first sidelink communication scheme. Furthermore, the second control information may include information on a slot used by the URLLC terminal in communication based on the first sidelink communication scheme. Furthermore, the second control information may include information obtained by converting signal transmission performed by the URLLC terminal based on the first sidelink communication scheme into an interference amount per slot. Furthermore, the second control information may include information on a resource reserved by the URLLC terminal for communication (e.g., URLLC traffic transmission) based on the first sidelink communication scheme.

Note that the first control information is, for example, control information collected from another URLLC terminal and/or control information generated to be transmitted to another URLLC terminal. The transmitting station of the URLLC terminal may use the first control information itself as the second control information, or may integrate a plurality of pieces of the first control information collected from a plurality of URLLC terminals into one piece of information as the second control information.

Then, the transmitting station of the URLLC terminal transmits the second control information to the non-URLLC terminal. At this time, the transmitting station of the URLLC terminal notifies the second control information through a channel receivable by the non-URLLC terminal based on the second sidelink communication scheme. The channel receivable by the second terminal device may be a physical sidelink control channel (PSCCH) or a physical sidelink shared channel (PSSCH).

Note that the communication apparatus that transmits the second control information is not limited to the URLLC terminal, and may be, for example, a base station or a non-URLLC terminal.

A transmission form of the second control information is classified into the following five forms (A1) to (A5) depending on which communication apparatus transmits the second control information.

(A1) Transmission by the transmitting station of the URLLC terminal
(A2) Transmission by the transmitting station of the representative URLLC terminal
(A3) Transmission by the receiving station of the URLLC terminal
(A4) Transmission by the base station 20
(A5) Transmission by the non-URLLC terminal capable of receiving the control information of the URLLC terminal

Each of the above five forms will be described below.

### <4-2. First form>

First, a case where the transmitting station of the URLLC terminal transmits the second control information to the non-URLLC terminal (the case of (A1) described above) will be described.

In the first form, the terminal device that transmits the second control information is a URLLC terminal (first terminal device) capable of communicating with another URLL terminal (first terminal device) based on the first sidelink communication scheme. More specifically, the terminal device that transmits the second control information is a transmitting station of the URLLC terminal that acquires the first control information from an other URLLC terminal. The transmitting station of the URLLC terminal acquires the first control information regarding a signal transmitted to the other URLLC terminal by itself based on the first sidelink communication scheme. Then, the transmitting station of the URLLC terminal notifies the non-URLLC terminal (second terminal device) of the second control information regarding the first control information.

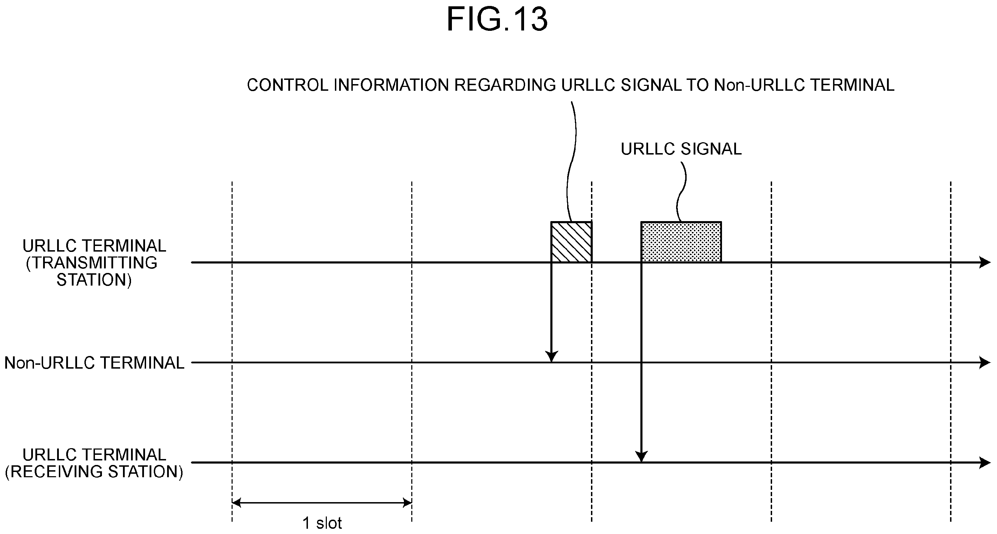

FIG. 13 is a sequence diagram when the transmitting station of the URLLC terminal transmits the second control information. Hereinafter, the operation of the communication system 1 in the first form will be described in detail with reference to the sequence diagram in FIG. 13.

When traffic occurs inside the transmitting station of the URLLC terminal, the transmitting station of the URLLC terminal selects a resource for sidelink transmission of the URLLC signal. The transmitting station of the URLLC terminal that has selected the resource transmits the control information (second control information) related to the URLLC signal to the non-URLLC terminal. The second control information may include, for example, information (information regarding the first control information) on a resource selected by the transmitting station of the URLLC terminal for the sidelink transmission of the URLLC signal. The second control information may also be the first control information as it **is.** The transmitting station of the URLLC terminal transmits the second control information by a communication scheme conforming to the second sidelink communication scheme. For example, the transmitting station of the URLLC terminal transmits the second control information at a position conforming to the slot boundary so that the second control information can also be acquired by the non-URLLC terminal.

### <4-3. Second form>

Next, a case where the transmitting station of the representative URLLC terminal transmits the second control information to the non-URLLC terminal (the case of (A2) described above) will be described.

In the second form, the terminal device that transmits the second control information is one of a plurality of URLL terminals (first terminal devices). For example, the terminal device that transmits the second control information is a representative terminal selected from the plurality of URLL terminals. The representative terminal acquires the first control information of each of the plurality of URLL terminals. For example, the representative terminal acquires its own first control information from its own storage unit, and acquires the first control information of another URLL terminal. The representative terminal notifies the non-URLLC terminal (second terminal device) of the second control information generated based on the first control information of each of the plurality of URLL terminals.

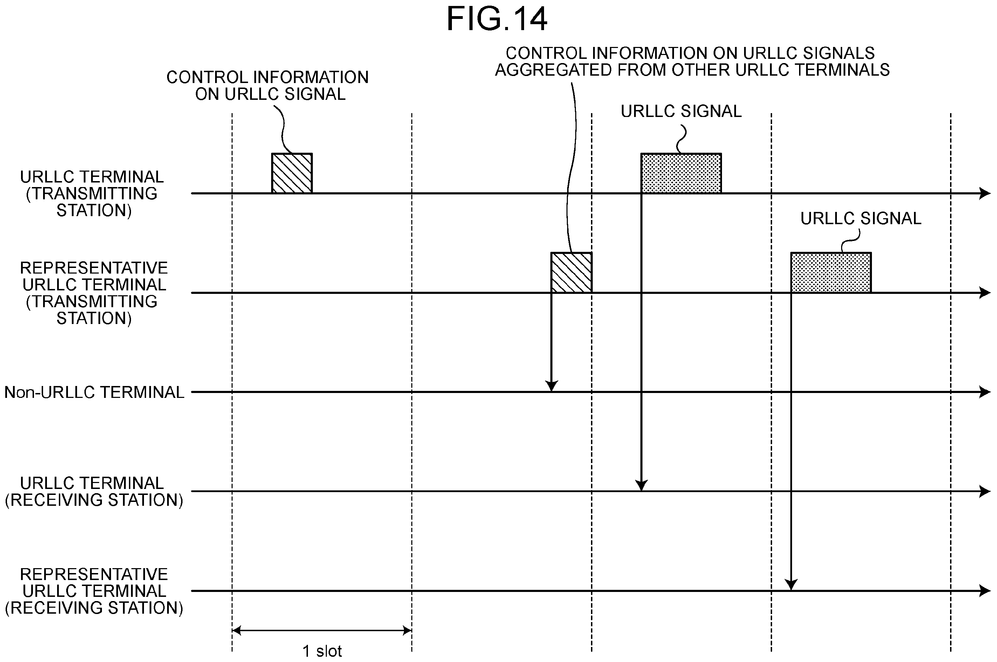

FIG. 14 is a sequence diagram when the transmitting station of the representative URLLC terminal transmits the second control information. Hereinafter, the operation of the communication system 1 in the second form will be described in detail with reference to the sequence diagram in FIG. 14.

A specific terminal among the URLLC terminals is selected as the representative terminal (e.g., master terminal device or primary terminal device). The base station may determine the representative terminal, or the plurality of URLLC terminals may autonomously determine the representative terminal.

The operation of the communication system 1 when the representative terminal is determined by the base station 20 is, for example, as follows. For example, the base station 20 selects the representative terminal based on position information or the like of each of the plurality of URLLC terminals. Then, the base station 20 transmits a signal for notifying the selected terminal that it has been selected as the representative terminal.

Furthermore, the operation of the communication system 1 when the URLLC terminal is autonomously determined is, for example, as follows. For example, the URLLC terminal transmits a signal for confirming, to the surrounding terminals, whether the already determined representative terminal exists. When the representative terminal already exists, the representative terminal that has received this signal transmits a signal notifying that the representative terminal exists. When the representative terminal does not exist, the URLLC terminal itself becomes the representative terminal.

The URLLC terminal determined as the representative terminal senses the first control information transmitted by another peripheral URLLC terminal **(e.g.,** slave terminal device, secondary terminal device, or member terminal device). Thereafter, the representative terminal transmits the second control information generated based on the collected first control information to the non-URLLC terminal. The second control information may be obtained by integrating a plurality of pieces of the first control information into one piece of information. The second control information may also be the first control information as it **is.** In this case, when there is a plurality of pieces of the first control information, there may be a plurality of pieces of the second control information.

The transmitting station of the URLLC terminal transmits the one or the plurality of pieces of the second control information by a communication scheme conforming to the second sidelink communication scheme. For example, the transmitting station of the URLLC terminal transmits the second control information at a position conforming to the slot boundary so that the second control information can also be acquired by the non-URLLC terminal.

### <4-4. Third form>

Next, a case where the receiving station of the URLLC terminal transmits the second control information to the non-URLLC terminal (the case of (A3) described above) will be described.

In the third form, the terminal device that transmits the second control information is a URLLC terminal (first terminal device) capable of communicating with an other URLLC terminal. More specifically, the terminal device that transmits the second control information is the receiving station of the URLLC terminal that acquires the first control information from the transmitting station of the other URLLC terminal. The receiving station of the URLLC terminal acquires the first control information regarding a signal transmitted to the receiving station of the URLLC terminal by the other URLLC terminal based on the first sidelink communication scheme. The receiving station of the URLLC terminal notifies the non-URLLC terminal (second terminal device) of the second control information regarding the first control information.

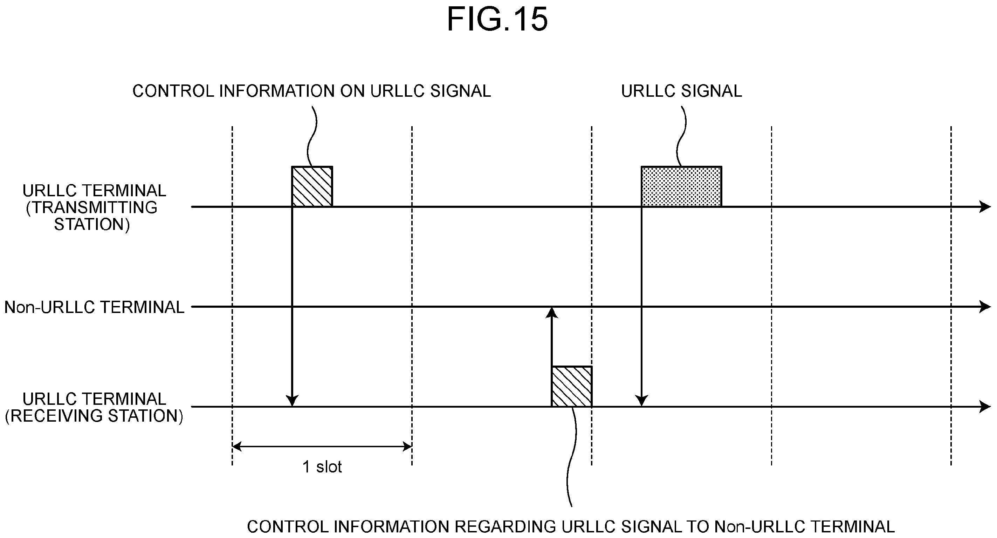

FIG. 15 is a sequence diagram when the receiving station of the URLLC terminal transmits the second control information. Hereinafter, the operation of the communication system 1 in the third form will be described in detail with reference to the sequence diagram in FIG. 15.

When traffic occurs inside the transmitting station of the URLLC terminal, the transmitting station of the URLLC terminal selects a resource for sidelink transmission of the URLLC signal. The transmitting station of the URLLC terminal that has selected the resource transmits the control information (first control information) regarding the URLLC signal to the receiving station of the URLLC terminal.

When receiving the first control information, the receiving station of the URLLC terminal generates the second control information based on the received first control information. The second control information may include, for example, information (information regarding the first control information) on a resource selected by the transmitting station of the URLLC terminal for the sidelink transmission of the URLLC signal. The second control information may also be the first control information as it is.

Then, the receiving station of the URLLC terminal transmits the second control information to the non-URLLC terminal. The transmitting station of the URLLC terminal transmits the second control information by a communication scheme conforming to the second sidelink communication scheme. For example, the transmitting station of the URLLC terminal transmits the second control information at a position conforming to the slot boundary so that the second control information can also be acquired by the non-URLLC terminal.

### <4-5. Fourth form>

Next, a case where the base station 20 transmits the second control information to the non-URLLC terminal (the case of (A2) described above) will be described.

In the fourth form, the base station 20, instead of the URLLC terminal, transmits the second control information to the non-URLLC terminal. The base station 20 performs processing related to the sidelink communication of the URLLC terminal. The base station 20 acquires the first control information of one or more URLL terminals (second terminal devices). The representative terminal notifies the non-URLLC terminal (second terminal device) of the second control information generated based on the first control information of the URLL terminal.

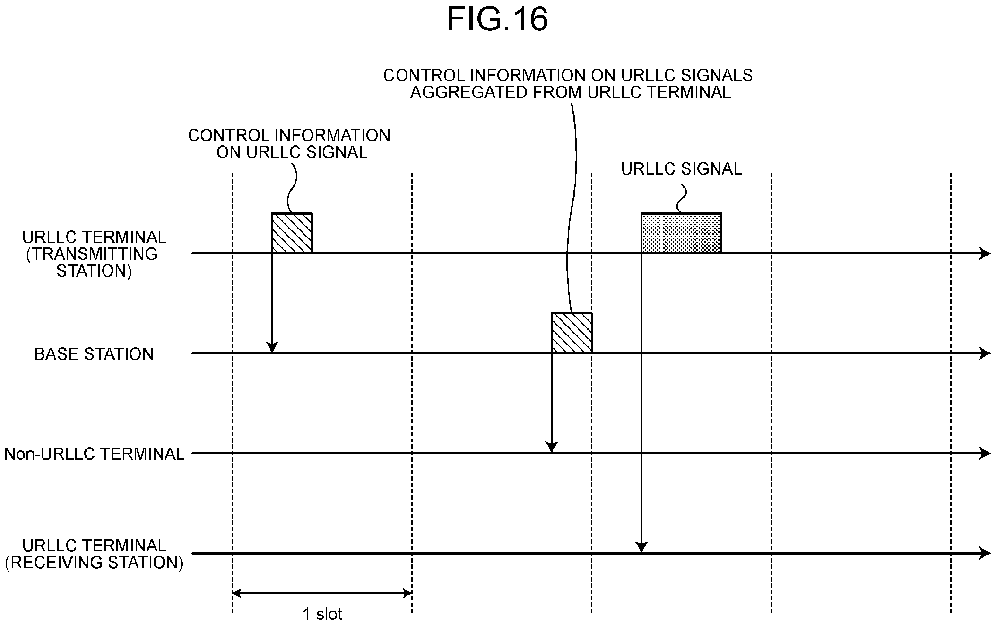

FIG. 16 is a sequence diagram when the base station 20 transmits the second control information. Hereinafter, the operation of the communication system 1 in the fourth form will be described in detail with reference to the sequence diagram in FIG. 16.

When traffic occurs inside the transmitting station of the URLLC terminal, the transmitting station of the URLLC terminal selects a resource for sidelink transmission of the URLLC signal. The transmitting station of the URLLC terminal that has selected the resource transmits the control information (first control information) regarding the URLLC signal to the base station **20.**

When receiving the first control information, the base station 20 generates the second control information based on the received first control information. The second control information may include, for example, information (information regarding the first control information) on a resource selected by the transmitting station of the URLLC terminal for the sidelink transmission of the URLLC signal. The second control information may also be the first control information as it **is.**

Then, the base station 20 transmits the second control information to the non-URLLC terminal. The transmitting station of the URLLC terminal transmits the second control information by a communication scheme conforming to the second sidelink communication scheme. For example, the transmitting station of the URLLC terminal transmits the second control information at a position conforming to the slot boundary so that the second control information can also be acquired by the non-URLLC terminal.

When the first control information is transmitted from the transmitting stations of the plurality of URLLC terminals, the base station 20 generates the second control information based on the first control information collected from the plurality of URLLC terminals. Then, the base station 20 transmits the generated second control information to the non-URLLC terminal. The second control information may be obtained by integrating a plurality of pieces of the first control information into one piece of information. The second control information may also be the first control information as it is. In this case, when there is a plurality of pieces of the first control information, there may be a plurality of pieces of the second control information. Note that, as described in <4-**4.** Third form> above, the representative terminal may be configured to transmit the first control information (or the second control information) of the plurality of URLLC terminals. In this case, the base station 20 may transmit the second control information generated based on the first control information (or the second control information) received from the representative terminal to the non-URLLC terminal.

Note that the base station 20 may have the first control information (control information regarding the URLLC signal) of the plurality of URLLC terminals in advance. In this case, the base station transmits the second control information to the non-URLLC terminal without acquiring the first control information from the transmitting station of the URLLC terminal. When the base station 20 performs this operation, the traffic of the URLLC terminal is desirably a periodic traffic. Then, the base station 20 may periodically collect URLLC traffic information of the URLLC terminal.

### <4-6. Fifth form>

Next, a case where the non-URLLC terminal capable of receiving the control information of the URLLC terminal transmits the second control information to another non-URLLC terminal (the case of (A5) described above) will be described.

In the fifth form, the terminal device that transmits the second control information is a non-URLLC terminal (second terminal device) capable of receiving the first control information transmitted by the URLLC terminal (first terminal device) based on the first sidelink communication scheme. The non-URLLC terminal acquires the first control information from the URLLC terminal. Then, the non-URLLC terminal notifies another non-URLLC terminal of the second control information regarding the first control information.

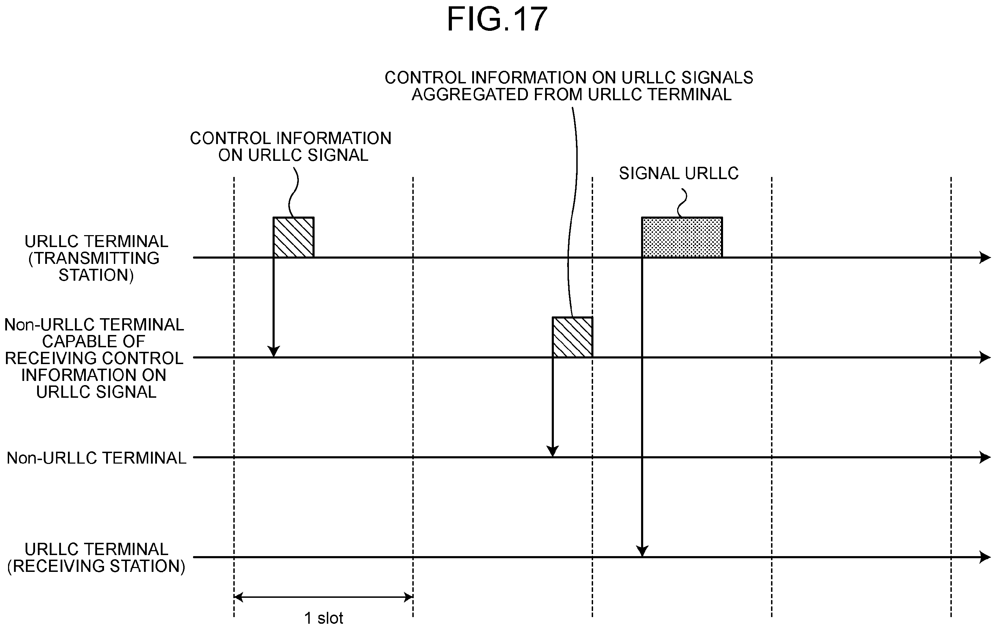

FIG. 17 is a sequence diagram when the non-URLLC terminal capable of receiving control information of a URLLC terminal transmits the second control information. Hereinafter, an operation of the communication system 1 in the fifth form will be described in detail with reference to the sequence diagram in FIG. 17.

When traffic occurs inside the transmitting station of the URLLC terminal, the transmitting station of the URLLC terminal selects a resource for sidelink transmission of the URLLC signal. The transmitting station of the URLLC terminal that has selected the resource transmits the control information (first control information) regarding the URLLC signal to the receiving station of the URLLC terminal.

The non-URLLC terminal receives the first control information transmitted by the transmitting station of the URLLC terminal. When receiving the first control information, the non-URLLC terminal generates the second control information based on the received first control information. The second control information may include, for example, information (information regarding the first control information) on a resource selected by the transmitting station of the URLLC terminal for the sidelink transmission of the URLLC signal. The second control information may also be the first control information as it is.

Then, the non-URLLC terminal transmits the second control information to an other non-URLLC terminal. The non-URLLC terminal transmits the second control information by a communication scheme conforming to the second sidelink communication scheme. For example, the non-URLLC terminal transmits the second control information at a position conforming to the slot boundary so that the second control information can also be acquired by the other non-URLLC terminal.

### <4-7. Transmission of second control information>

Next, transmission of the second control information to the non-URLLC terminal will be described.

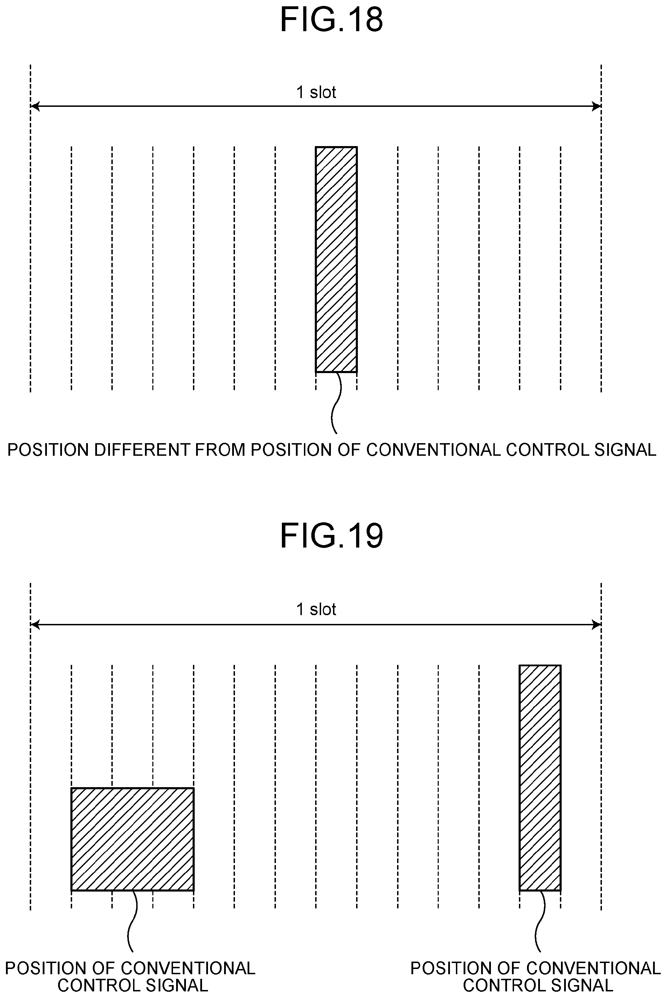

First, an arrangement of the second control information in the resource will be described. As described in the first to fifth forms, the communication apparatus (URLLC terminal, base station 20, or non-URLLC terminal) that has acquired the first control information transmits the second control information by the communication scheme conforming to the second sidelink communication scheme. At this time, the communication apparatus may transmit the second control information by using an OFDM symbol different from a conventional control signal transmission position defined in the standard. FIG. 18 is a diagram illustrating a state in which the second control information is arranged at a position different from a position of a conventional control signal. At this time, the communication apparatus may transmit the second control information by using the same OFDM symbol as the conventional control signal transmission position defined in the standard. FIG. 19 is a diagram illustrating a state in which the second control information is arranged at a position of the conventional control signal.

The non-URLLC terminal acquires interference information regarding the URLLC terminal based on the second control information transmitted by the above-described operation. As a result, the non-URLLC terminal can acquire the control information regarding the URLLC terminal, and thus more efficient sidelink communication can be performed.

Next, a transmission timing of the second control information to the non-URLLC terminal will be described. The transmission of the second control information to the non-URLLC terminal may be performed before the transmission of the URLLC traffic is performed or simultaneously with the transmission of the URLLC traffic. For example, the communication apparatus may transmit the second control information at a timing when the information can be transmitted to the non-URLLC terminal immediately after determining the radio resource for transmitting the URLLC traffic. In addition, the communication apparatus may repeatedly transmit the second control information to the non-URLLC terminal. In this case, the communication apparatus may transmit the second control information at a constant cycle and at a timing when the information can be transmitted to the non-URLLC terminal. For example, it is assumed that the transmitting station or the base station of the representative URLLC terminal is a communication apparatus that transmits the second control information. In this case, the communication apparatus collects the first control information from the transmitting station of a surrounding URLLC terminal at regular intervals. Then, the communication apparatus transmits the second control information generated based on the first control information collected at regular intervals to the non-URLLC terminal.

Further, the transmission of the second control information to the non-URLLC terminal may be performed during the transmission of the URLLC traffic. For example, when the URLLC traffic is transmitted using a plurality of resources or when the URLLC traffic is repeatedly transmitted, the communication apparatus may transmit the second control information to the non-URLLC terminal after some URLLC traffic is transmitted.

### <4-8. Summary of transmission of control information>

Hereinafter, transmission of the control information according to the present embodiment will be summarized.

### <4-8-1. Transmission of first control information>

When the URLLC traffic occurs, the transmitting station of the URLLC terminal transmits, to another communication apparatus, the control information for transmitting the URLLC traffic to another URLLC terminal by using a predetermined symbol. In this symbol, for example, the PSCCH (first control information) for the URLLC terminal is stored. Note that a destination (another communication apparatus) of the first control information may be a peripheral URLLC terminal or a terminal capable of receiving URLLC control information such as the base station. As long as the first control information can be received, the destination (another communication apparatus) of the first control information may also be a non-URLLC terminal.

The first control information transmitted by the transmitting station of the URLLC terminal may include at least one of the following information (B1) to (B3).

(B1) Information on transmission timing of signal storing URLLC traffic
(B2) Information on the number of symbols used in URLLC traffic transmission
(B3) Reservation information for URLLC traffic transmission

Here, the information (B1) is information on a slot and a symbol for transmitting a signal storing the URLLC traffic. In this information, the slot and OFDM index information are stored.

The information (B2) is information on the number of OFDM symbols used for the URLLC traffic in the slot.

The information (B3) is information on radio resources used when the URLLC traffic is transmitted in a resource of the same slot as the URLLC traffic or a resource in a subsequent slot and after. The number of repetitions of radio resource to be used at equal intervals may be stored in this information. Furthermore, when different OFDM symbol positions and subchannels are used when the URLLC is transmitted, these pieces of information may also be stored.

### <4-8-2. Transmission of second control information>

The non-URLLC terminal cannot receive the PSCCH of the URLLC traffic that can be transmitted from the middle of the slot. In other words, the non-URLLC terminal cannot perform sidelink sensing (SL sensing) for the URLLC traffic. Therefore, even in such a case, a communication apparatus **(e.g.,** URLLC terminal, base station 20, or non-URLLC terminal) capable of transmitting or receiving the first information notifies the non-URLLC terminal of the second control information regarding the first control information through a channel **(e.g.,** PSCCH and/or PSSCH) capable of being received by the non-URLLC terminal, so that the non-URLLC terminal can perform the SL sensing **(i.e.,** identification of resource reservation status).

### (1) Channel used for transmitting second control information

As a channel for transmitting the second control information, the following (C1) and (C2) are assumed.

### (C1) PSCCH

In other words, the communication apparatus transmits the second control information as the control information of the physical layer through the channel in the physical layer. When the number of resources to be notified is less than the predetermined number, the communication apparatus notifies the second control information through the PSCCH.

### (C2) PSSCH

In other words, the communication apparatus transmits the control information as control information in the MAC or RRC layer through a channel in the MAC or RRC layer. When the number of resources to be notified is the predetermined number or more, the communication apparatus notifies the second control information through the PSSCH.

### (2) Resource used for transmitting second control information

The communication apparatus may transmit the second control information at a transmission timing of the control information conforming to the next slot. In addition, the communication apparatus may transmit the second control information at predetermined time and frequency resources after the next slot. At this time, the resource for transmitting the second control information may be set by RRC signaling. At this time, a resource (such as a subchannel number) of the PSCCH that can be transmitted may be set in the communication apparatus.

### (3) Terminal device for transmitting second control information

The communication apparatus that transmits the second control information may be the URLLC terminal or the base station **20.** Furthermore, the communication apparatus that transmits the second control information may be the non-URLLC terminal capable of receiving the first information. When the terminal device transmits the second control information, the following (D1) and (D2) are assumed as the communication apparatus that transmits the second control information.

### (D1) Predetermined URLLC terminal explicitly set by RRC signaling

### (D2) Predetermined terminal device implicitly determined based on a predetermined condition

Note that, as the terminal device (D2), for example, a URLLC terminal transmitted using a predetermined subchannel in the previous slot is assumed. Furthermore, as the terminal device (D2), for example, all URLLC terminals transmitted in the previous slot are assumed.

### (4) Content of second control information

The second control information transmitted by the communication apparatus may include at least one of the following pieces of information (E1) to (E5).

(E1) Information on transmission timing of signal storing URLLC traffic
(E2) Information on the number of symbols used in URLLC traffic transmission
(E3) Reservation information for URLLC traffic transmission
(E4) Information on interference amount of slot that transmits a signal storing URLLC traffic
(E5) Information integrating a plurality of signals storing URLLC traffic

Here, the information (E1) to (E3) is similar to the information (B1) to (B3) described above. Note that the information (E3) may be reservation information for URLLC traffic transmission for the resource of a slot before the slot to which the second control information is transmitted.

The information (E4) is information obtained by converting an interference of the signal storing the URLLC traffic into an interference amount in units of slots. For example, the information (E4) is information on the interference amount per slot calculated according to the number of symbols for transmitting URLLC traffic.

The information (E5) is, for example, information integrating a plurality of signals transmitted from a single terminal device. Furthermore, the information (E5) is, for example, information integrating a plurality of signals transmitted from a plurality of terminal devices. The communication apparatus may transmit the information (E5) to the non-URLLC terminal as one signal. The communication apparatus that transmits the information (E5) may be a base station or a terminal device selected from a plurality of terminal devices.

### <<5. Modifications>>

The above-described embodiments are examples, and various modifications and applications are possible.

For example, the technology of the present embodiment is applicable not only to the sidelink communication using a licensed band but also to the sidelink communication using an unlicensed band.

In addition, the technology of the present embodiment is applicable not only to the sidelink communication but also to other cellular communications such as uplink communication and downlink communication. In this case, the description of "sidelink communication" in the above-described embodiments may be replaced with "cellular communication". In this case, one of the first terminal device and the second terminal device may be the base station 20 (or relay station). Both the first terminal device and the second terminal device may be the base station 20 (and/or a relay station).

In the above embodiment, the first sidelink communication scheme is a sidelink communication scheme in which signals from a plurality of terminal devices can exist in one radio resource of one slot. In the above embodiment, the second sidelink communication scheme is a sidelink communication scheme in which signals from a plurality of terminal devices exist in one radio resource of one slot. However, the second sidelink communication scheme is not limited to this example.

For example, the first sidelink communication scheme may be a sidelink communication scheme in which signals from a plurality of terminal devices can exist in one radio resource (resource block) defined by a first criterion. In addition, the second sidelink communication scheme may be a sidelink communication scheme in which signals from the plurality of terminal devices exist in one radio resource (resource block) defined by a second criterion different from the first criterion. The first criterion and the second criterion may be different cellular communication standards. For example, the first criterion and the second criterion may be criteria defined in the LTE standard, may be standards defined in the 5G standard, or may be other standards (e.g., standard defined in cellular communication standards for 5G and after).

In addition, the sidelink communication scheme may include a sidelink communication scheme (e.g., third sidelink communication scheme, fourth sidelink communication scheme, and so on) other than the first sidelink communication scheme and the second sidelink communication scheme. Also in this case, the technology of the present embodiment is applicable.

In the above embodiment, the communication apparatus acquires the first control information transmitted by the first terminal device (or the communication apparatus itself) based on the first sidelink communication scheme, and transmits the second control information based on the first control information to the second terminal device. The information to be acquired/transmitted by the communication apparatus is not limited to the control information. For example, the communication apparatus may acquire first information transmitted by the first terminal device (or the communication apparatus itself) based on the first sidelink communication scheme, and transmit second information based on the first information to the second terminal device. At this time, the first information and the second information may be information other than the control information. For example, the first information and the second information may be user data.

The control device that controls the management device 10, the base station 20, the terminal device 30, and the terminal device 40 of the present embodiment may be realized by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, the program is installed on a computer, and the above-described processes are executed to configure the control device. Here, the control device may be a device (e.g., personal computer) outside the management device 10, the base station 20, the terminal device 30, and the terminal device 40. Furthermore, the control device may be a device inside the management device 10, the base station 20, the terminal device 30, and the terminal device 40 (e.g., the control unit 13, the control unit 23, the control unit 33, and the control unit 43).

In addition, the above communication program may be stored in a disk device included in a server device on a network such as the Internet so that the communication program can be downloaded to the computer. In addition, the above-described functions may be realized by cooperation of an operating system (OS) and application software. In this case, a portion other than the OS may be stored in a medium and distributed, or a portion other than the OS may be stored in a server device and downloaded to the computer.

Among the processes described in the above embodiments, all or part of the processes described as being performed automatically can be performed manually, or all or part of the processes described as being performed manually can be performed automatically by a known method. In addition, the processing procedure, specific name, and information including various data and parameters illustrated in the above document and the drawings can be arbitrarily changed unless otherwise specified. For example, various types of information illustrated in each drawing are not limited to the illustrated information.

In addition, each component of each device illustrated in the drawings is functionally conceptual, and is not necessarily physically configured as illustrated in the drawings. In other words, a specific form of distribution and integration of each device is not limited to the illustrated form, and all or a part thereof can be functionally or physically distributed and integrated in an arbitrary unit according to various loads, usage conditions, and the like. Note that this configuration by distribution and integration may be performed dynamically.

In addition, the above-described embodiments can be appropriately combined in a region in which the processing content do not contradict each other. Furthermore, the order of each step illustrated in the flowchart of the above-described embodiments can be appropriately changed.

Furthermore, for example, the present embodiment can be implemented as any configuration constituting an apparatus or a system, for example, a processor as a system large scale integration (LSI) or the like, a module using a plurality of processors or the like, a unit using a plurality of modules or the like, a set obtained by further adding other functions to a unit, or the like (i.e., configuration of a part of device).

Note that, in the present embodiment, the system means a set of a plurality of components (devices, modules (parts), etc.), and it does not matter whether or not all the components are in the same housing. Therefore, the plurality of devices housed in separate housings and connected via the network and one device in which a plurality of modules is housed in one housing are both systems.

Furthermore, for example, the present embodiments can adopt a configuration of cloud computing in which one function is shared and processed by a plurality of devices in cooperation via a network.

### <<6. Conclusion>>

As described above, according to the embodiments of the present disclosure, the communication system 1 includes the terminal device 30 (e.g., URLLC terminal) capable of performing communication based on the first sidelink communication scheme, and the terminal device 40 (e.g., non-URLLC terminal) capable of performing communication based on the second sidelink communication scheme different from the first sidelink communication scheme. The terminal device 30 acquires the first control information regarding a signal transmitted based on the first sidelink communication scheme. Then, the terminal device 30 notifies the terminal device 40 of the second control information regarding the first control information. For example, the terminal device 30 notifies the second control information through a channel receivable by the terminal device 40 based on the second sidelink communication scheme.

As a result, since the terminal device 40 can recognize the control information of the terminal device 30, the adjustment (e.g., adjustment of use of radio resources) of the sidelink communication is successfully performed between the terminal device 30 and the terminal device 40. As a result, the communication system 1 can realize the sidelink communication with high communication performance.

Although the embodiments of the present disclosure have been described above, the technical scope of the present disclosure is not limited to the above-described embodiments as it is, and various modifications can be made without departing from the gist of the present disclosure. In addition, the components of different embodiments and modifications may be appropriately combined.

Note that the effects of each embodiment described in the present specification are merely examples and not limited thereto, and other effects may be provided.

The present technology can also have the following configurations.
(1) A terminal device capable of communicating with a first terminal device capable of performing communication based on a first sidelink communication scheme, the terminal device comprising:
   an acquisition unit that acquires first control information regarding a signal transmitted based on the first sidelink communication scheme; and
   a notification unit that notifies a second terminal device of second control information regarding the first control information, the second terminal device performing communication based on a second sidelink communication scheme different from the first sidelink communication scheme.
(2) The terminal device according to (1), wherein
   the first sidelink communication scheme is a sidelink communication scheme in which signals from a plurality of terminal devices can exist in one radio resource of one slot, and
   the second sidelink communication scheme is a sidelink communication scheme in which a signal from one terminal device exists in one radio resource of one slot.
(3) The terminal device according to (2), wherein
   the notification unit notifies the second control information through a channel receivable by the second terminal device based on the second sidelink communication scheme.
(4) The terminal device according to (3), wherein
   the channel receivable by the second terminal device includes a physical sidelink control channel (PSCCH).
(5) The terminal device according to (3) or (4), wherein
   the channel receivable by the second terminal device includes a physical sidelink shared channel (PSSCH).
(6) The terminal device according to any one of (2) to (5), wherein
   the first control information includes information on a transmission timing of a signal transmitted by the first terminal device based on the first sidelink communication scheme.
(7) The terminal device according to any one of (2) to (6), wherein
   the first control information includes information on a number of symbols used by the first terminal device for communication based on the first sidelink communication scheme.
(8) The terminal device according to any one of (2) to (7), wherein
   the second control information includes information on a resource used by the first terminal device for communication based on the first sidelink communication scheme.
(9) The terminal device according to any one of (2) to (8), wherein
   the second control information includes information on a transmission timing of a signal transmitted by the first terminal device based on the first sidelink communication scheme.
(10) The terminal device according to any one of (2) to (9), wherein
   the second control information includes information on a slot used by the first terminal device for communication based on the first sidelink communication scheme.
(11) The terminal device according to any one of (2) to (10), wherein
   the second control information includes information obtained by converting transmission of a signal performed by the first terminal device into an interference amount per slot, the transmission being performed based on the first sidelink communication scheme.
(12) The terminal device according to any one of (2) to (11), wherein
   the second control information includes information obtained by integrating a plurality of pieces of the first control information.
(13) The terminal device according to any one of (2) to (12), wherein
   the second control information includes information on a resource reserved for communication by the first terminal device based on the first sidelink communication scheme.
(14) The terminal device according to any one of (1) to (13), wherein
   the terminal device is the first terminal device capable of communicating with an other first terminal device,
   the acquisition unit acquires first control information regarding a signal transmitted from the terminal device to the other first terminal device based on the first sidelink communication scheme, and
   the notification unit notifies the second terminal device of second control information regarding the first control information.
(15) The terminal device according to any one of (1) to (13), wherein
   the terminal device is one of a plurality of the first terminal devices,
   the acquisition unit acquires the first control information of each of the plurality of first terminal devices, and
   the notification unit notifies the second terminal device of the second control information generated based on the first control information of each of the plurality of first terminal devices.
(16) The terminal device according to (15), wherein
   the second control information includes information obtained by integrating the first control information of each of the plurality of first terminal devices.
(17) The terminal device according to any one of (1) to (13), wherein
   the terminal device is the first terminal device capable of communicating with an other first terminal device,
   the acquisition unit acquires the first control information regarding a signal transmitted from the other first terminal device to the terminal device based on the first sidelink communication scheme, and
   the notification unit notifies the second terminal device of the second control information regarding the first control information.
(18) The terminal device according to any one of (1) to (13), wherein
   the terminal device is the second terminal device capable of receiving the first control information based on the first sidelink communication scheme,
   the acquisition unit acquires the first control information from the first terminal device, and
   the notification unit notifies an other second terminal device of the second control information regarding the first control information.
(19) A base station that performs processing related to sidelink communication of a first terminal device capable of performing communication based on a first sidelink communication scheme, the base station comprising:
   an acquisition unit that acquires first control information regarding a signal transmitted based on the first sidelink communication scheme; and
   a notification unit that notifies a second terminal device of second control information regarding the first control information, the second terminal device performing communication based on a second sidelink communication scheme different from the first sidelink communication scheme.
(20) A communication system comprising: a terminal device capable of communicating with a first terminal device capable of performing communication based on a first sidelink communication scheme; and a base station that performs processing related to sidelink communication of the first terminal device, wherein
   one of the terminal device and the base station includes
   an acquisition unit that acquires first control information regarding a signal transmitted based on the first sidelink communication scheme, and
   a notification unit that notifies a second terminal device of second control information regarding the first control information, the second terminal device performing communication based on a second sidelink communication scheme different from the first sidelink communication scheme.

### Reference Signs List

1 COMMUNICATION SYSTEM
10 MANAGEMENT DEVICE
20 BASE STATION
30, 40 TERMINAL DEVICE
11 COMMUNICATION UNIT
21, 31, 41 WIRELESS COMMUNICATION UNIT
12, 22, 32, 42 STORAGE UNIT
13, 23, 33, 43 CONTROL UNIT
211, 311, 411 TRANSMISSION PROCESSING UNIT
212, 312, 412 RECEPTION PROCESSING UNIT
213, 313, 413 ANTENNA
231, 331, 431 ACQUISITION UNIT
232, 332, 432 NOTIFICATION UNIT

## Claims

1. A terminal device capable of communicating with a first terminal device capable of performing communication based on a first sidelink communication scheme, the terminal device comprising:
an acquisition unit that acquires first control information regarding a signal transmitted based on the first sidelink communication scheme; and
a notification unit that notifies a second terminal device of second control information regarding the first control information, the second terminal device performing communication based on a second sidelink communication scheme different from the first sidelink communication scheme.

2. The terminal device according to claim 1, wherein
the first sidelink communication scheme is a sidelink communication scheme in which signals from a plurality of terminal devices can exist in one radio resource of one slot, and
the second sidelink communication scheme is a sidelink communication scheme in which a signal from one terminal device exists in one radio resource of one slot.

3. The terminal device according to claim 2, wherein
the notification unit notifies the second control information through a channel receivable by the second terminal device based on the second sidelink communication scheme.

4. The terminal device according to claim 3, wherein
the channel receivable by the second terminal device includes a physical sidelink control channel (PSCCH).

5. The terminal device according to claim 3, wherein
the channel receivable by the second terminal device includes a physical sidelink shared channel (PSSCH).

6. The terminal device according to claim 2, wherein
the first control information includes information on a transmission timing of a signal transmitted by the first terminal device based on the first sidelink communication scheme.

7. The terminal device according to claim 2, wherein
the first control information includes information on a number of symbols used by the first terminal device for communication based on the first sidelink communication scheme.

8. The terminal device according to claim 2, wherein
the second control information includes information on a resource used by the first terminal device for communication based on the first sidelink communication scheme.

9. The terminal device according to claim 2, wherein
the second control information includes information on a transmission timing of a signal transmitted by the first terminal device based on the first sidelink communication scheme.

10. The terminal device according to claim 2, wherein
the second control information includes information on a slot used by the first terminal device for communication based on the first sidelink communication scheme.

11. The terminal device according to claim 2, wherein
the second control information includes information obtained by converting transmission of a signal performed by the first terminal device into an interference amount per slot, the transmission being performed based on the first sidelink communication scheme.

12. The terminal device according to claim 2, wherein
the second control information includes information obtained by integrating a plurality of pieces of the first control information.

13. The terminal device according to claim 2, wherein
the second control information includes information on a resource reserved for communication by the first terminal device based on the first sidelink communication scheme.

14. The terminal device according to claim 1, wherein
the terminal device is the first terminal device capable of communicating with an other first terminal device,
the acquisition unit acquires first control information regarding a signal transmitted from the terminal device to the other first terminal device based on the first sidelink communication scheme, and
the notification unit notifies the second terminal device of second control information regarding the first control information.

15. The terminal device according to claim 1, wherein
the terminal device is one of a plurality of the first terminal devices,
the acquisition unit acquires the first control information of each of the plurality of first terminal devices, and
the notification unit notifies the second terminal device of the second control information generated based on the first control information of each of the plurality of first terminal devices.

16. The terminal device according to claim 15, wherein
the second control information includes information obtained by integrating the first control information of each of the plurality of first terminal devices.

17. The terminal device according to claim **1,** wherein
the terminal device is the first terminal device capable of communicating with an other first terminal device,
the acquisition unit acquires the first control information regarding a signal transmitted from the other first terminal device to the terminal device based on the first sidelink communication scheme, and
the notification unit notifies the second terminal device of the second control information regarding the first control information.

18. The terminal device according to claim **1,** wherein
the terminal device is the second terminal device capable of receiving the first control information based on the first sidelink communication scheme,
the acquisition unit acquires the first control information from the first terminal device, and
the notification unit notifies an other second terminal device of the second control information regarding the first control information.

19. A base station that performs processing related to sidelink communication of a first terminal device capable of performing communication based on a first sidelink communication scheme, the base station comprising:
an acquisition unit that acquires first control information regarding a signal transmitted based on the first sidelink communication scheme; and
a notification unit that notifies a second terminal device of second control information regarding the first control information, the second terminal device performing communication based on a second sidelink communication scheme different from the first sidelink communication scheme.

20. A communication system comprising: a terminal device capable of communicating with a first terminal device capable of performing communication based on a first sidelink communication scheme; and a base station that performs processing related to sidelink communication of the first terminal device, wherein
one of the terminal device and the base station includes
an acquisition unit that acquires first control information regarding a signal transmitted based on the first sidelink communication scheme, and
a notification unit that notifies a second terminal device of second control information regarding the first control information, the second terminal device performing communication based on a second sidelink communication scheme different from the first sidelink communication scheme.
